# EUROPÄISCHE PATENTSCHRIFT

(11) **EP 2 379 572 B1**
(45) Veröffentlichungstag und Bekanntmachung des Hinweises auf die Patenterteilung: **23.12.2015**
(21) Anmeldenummer: 09778844.2
(22) Anmeldetag: 06.10.2009
(51) Int. Cl.: C07F 9/30, C07F 9/48, C08K 5/53, C09K 21/12

(54) **VERFAHREN ZUR HERSTELLUNG VON MONO-FUNKTIONALISIERTEN DIALKYLPHOSPHINSÄUREN, -ESTERN UND -SALZEN UND IHRE VERWENDUNG**
METHOD FOR THE PRODUCTION OF MONOFUNCTIONALIZED DIALKYLPHOSPHINIC ACIDS, ESTERS, AND SALTS, AND USE THEREOF
PROCÉDÉ DE FABRICATION D'ACIDES, D'ESTERS ET DE SELS DIALKYLPHOSPHINIQUES MONOFONCTIONNALISÉS ET LEUR UTILISATION

(30) Priorität: 19.12.2008 DE 102008064003
(43) Veröffentlichungstag der Anmeldung: 26.10.2011
(73) Patentinhaber: CLARIANT INTERNATIONAL LTD, 4132 Muttenz (CH)
(72) Erfinder: HILL, Michael, 50827 Köln (DE); BAUER, Harald, 50170 Kerpen (DE); KRAUSE, Werner, 50354 Hürth (DE); SICKEN, Martin, 51149 Köln (DE)
(74) Vertreter: Mikulecky, Klaus
(86) Internationale Anmeldenummer: PCT/EP2009/007144
(87) Internationale Veröffentlichungsnummer: WO 2010/069420

(56) Entgegenhaltungen:
- EP-A1- 1 905 776
- WO-A1-02/100871
- US-A- 5 013 863
- US-A1- 2002 187 977
- MONTCHAMP J L: "Recent advances in phosphorus-carbon bond formation: synthesis of H-phosphinic acid derivatives from hypophosphorous compounds" JOURNAL OF ORGANOMETALLIC CHEMISTRY, ELSEVIER-SEQUOIA S.A. LAUSANNE, CH, Bd. 690, Nr. 10, 16. Mai 2005 (2005-05-16) , Seiten 2388-2406, XP004877374 ISSN: 0022-328X
- SYLVINE DEPRÈLE ET AL: "Palladium-Catalyzed Hydrophosphinylation of Alkenes and Alkynes" JOURNAL OF THE AMERICAN CHEMICAL SOCIETY, AMERICAN CHEMICAL SOCIETY, WASHINGTON, DC. US, Bd. 124, Nr. 32, 1. Januar 2002 (2002-01-01), Seite 9387, XP002500862 ISSN: 0002-7863
- KARLA BRAVO-ALTAMIRANOA ET AL: "A NOVEL APPROACH TO PHOSPHONIC ACIDS FROM HYPOPHOSPHOROUS ACID" TETRAHEDRON LETTERS, ELSEVIER, AMSTERDAM, NL, Bd. 48, Nr. 33, 23. Juni 2007 (2007-06-23) , Seiten 5755-5759, XP0022163552 ISSN: 0040-4039
- SYLVINE DEPRÈLE ET AL: "Environmentally Benign Synthesis of H-Phosphinic Acids Using a Water-Tolerant, Recyclable Polymer-Supported Catalyst" ORGANIC LETTERS, AMERICAN CHEMICAL SOCIETY, US, Bd. 6, Nr. 21, 1. Januar 2004 (2004-01-01) , Seiten 3805-3808, XP002500861 ISSN: 1523-7060 [gefunden am 2004-09-18]
- PATRICE RIBIÈRE ET AL: "NiCl2-Catalyzed Hydrophosphinylation" JOURNAL OF ORGANIC CHEMISTRY, AMERICAN CHEMICAL SOCIETY, EASTON.; US, Bd. 70, Nr. 10, 1. Januar 2005 (2005-01-01), Seiten 4064-4072, XP002530191 ISSN: 0022-3263
- PAVEL REZANKA ET AL: "Synthesis of a Bifunctional Monophosphinate DOTA Derivative Having a Free Carboxylate Group in the Phosphorus Side Chain" SYNTHESIS, GEORG THIEME VERLAG, STUTTGART, DE, Nr. 9, 1. September 2008 (2008-09-01), Seiten 1431-1435, XP009126087 ISSN: 0039-7881
- DATABASE BEILSTEIN [Online] BEILSTEIN INSTITUTE FOR ORGANIC CHEMISTRY, FRANKFURT-MAIN, DE; 1962, XP002557780 Database accession no. Reaction ID 938840 & PUDOVIK, A. N. ET AL.: J. GEN CHEM. USSR, Bd. 32, 1962, Seiten 460-463,
- DIEL P J ET AL: "ORGANISCHE PHOSPHORVERBINDUNGEN 84. HERSTELLUNG, EIGENSCHAFTEN UND BIOLOGISCHE WIRKUNG VON HYDRAZINO-METHYL-PHOSPHON- UND PHOSPHINSAEUREN UND DERIVATEN" PHOSPHORUS AND SULFUR AND THE RELATED ELEMENTS, GORDON AND BREACH - HARWOOD ACADEMIC, CH, Bd. 36, 1. Januar 1988 (1988-01-01), Seiten 85-98, XP001105809 ISSN: 0308-664X
- SASSE K ED - SASSE K: "Houben -Weyl Methoden der Organischen Chemie" 1. Januar 1963 (1963-01-01), ORGANISCHE PHOSPHOR-VERBINDUNGEN; [METHODEN DER ORGANISCHEN CHEMIE], STUTTGART, G. THIEME VERLAG, DE , XP002557781 , Seiten 228-229 Endprodukt der Reaktion in Zeile 10; Seite 229, Zeile 7 - Zeile 10
- FROESTL W ET AL: "PHOSPHINIC ACID ANALOGUES OF GABA. 2. SELECTIVE, ORALLY ACTIVE GABAB ANTAGONISTS" JOURNAL OF MEDICINAL CHEMISTRY, AMERICAN CHEMICAL SOCIETY, WASHINGTON, US, Bd. 38, Nr. 17, 1. Januar 1995 (1995-01-01), Seiten 3313-3331, XP000999491 ISSN: 0022-2623
- PIOTR MAJEWSKI: "A New Method for the Preparation of Bis(1-hydroxyalkyl)-phosphinic Acids" SYTHESIS,, Bd. 6, 1. Januar 1987 (1987-01-01), Seiten 555-557, XP002558292
- KIELBASINSKI P ET AL: "Enzymatic reactions in ionic liquids: lipase-catalysed kinetic resolution of racemic, P-chiral hydroxymethanephosphinates and hydroxymethylphosphine oxides" TETRAHEDRON ASYMMETRY, PERGAMON PRESS LTD, OXFORD, GB, Bd. 13, Nr. 7, 2. Mai 2002 (2002-05-02), Seiten 735-738, XP004354866 ISSN: 0957-4166
- MAIER L: "ORGANIC PHOSPHORUS COMPOUNDS 91.1 SYNTHESIS AND PROPERTIES OF 1-AMINO-2-ARYLETHYLPHOSPHONIC AND -PHOSPHINIC ACIDS AS WELL AS PHOSPHINE OXIDES" PHOSPHORUS, SULFUR AND SILICON AND THE RELATED ELEMENTS, GORDON AND BREACH SCIENCE PUBLISHERS, AMSTERDAM, GB, Bd. 53, Nr. 1/04, 1. Januar 1990 (1990-01-01), Seiten 43-67, XP000671624 ISSN: 1042-6507

## Beschreibung

Die Erfindung betrifft ein Verfahren zur Herstellung von monofunktionaliserten Dialkylphosphinsäuren, -estern und -salzen sowie deren Verwendung.

Monofunktionalisierte Dialkylphosphinsäuren sind nach dem Stand der Technik durch Addition von ungesättigten Verbindungen an Phenylphosphonigsäurederivate bzw. Methylphosphonigsäurederivate zugänglich. Die Anlagerung von Alkenylacetaten an letztere ist bekannt. Phenylphosphonigsäurederivate bzw. Methylphosphonigsäurederivate sind bisher nur durch Verwendung von Phosphorhalogen-Verbindungen (Phosphortrichlorid) zugänglich, da die direkte Addition eines doppelbindungshaltigen Reaktionspartners (Olefin, Aldehyd, Keton etc) nicht zu diesen Vertretern führt.

Die stufenweise Anlagerung von Olefinen an Hypophosphorige Säure oder ihre Salze oder Derivate zu unsymmetrischen Dialkylsäuren ist wenig bekannt und nicht bevorzugt weil die radikalische Anlagerung von Alkyl- oder Arylphosphinsäureestern an nicht aktivierte alpha-Olefine mäßige Ausbeuten und unerwünschte telomere Nebenprodukte ergibt. Außerdem ist die Anlagerung nicht selektiv schrittweise, sondern führt zur zweifachen Addition des gleichen Olefins und erheblichen Nebenproduktanteilen in Form von symmetrischen Dialkylphosphinsäuren.

Die Addition von längerkettigen Akenen an Phosphor-enthaltenden Ausgangsmaterialien unter Einsatz ausgewählter Übergangsmetallverbindungen wird in MONTCHAMP J L: "Recent advances in phosphorus-carbon bond formation: synthesis of H-phosphinic acid derivatives from hypophosphorous compounds" (JOURNAL OF ORGANOMETALLIC CHEMISTRY, ELSEVIER-SEQUOIA S.A. LAUSANNE, CH, Bd. 690, Nr. 10, 16. Mai 2005 (2005-05-16), Seiten 2388-2406, XP004877374 ISSN: 0022-328X) beschrieben.

Umsetzungen von P-haltigen Verbindungen mit Ketonen oder Aldehyden in Awesenheit bestimmter Katalysatoren, beschreibt DATABASE BEILSTEIN [Online], BEILSTEIN INSTITUTE FOR ORGANIC CHEMISTRY, FRANKFURT-MAIN, DE; 1962, (Database accession no. Reaction ID 938840).

Nicht radikalisch hergestellte funktionelle Derivate der Ethylphosphinsäure und aminfunktionalisierte Derivate der Ethylphosphinsäure sind nicht bekannt.

Aufgabe der Erfindung ist es ein halogenfreies Verfahren zur Herstellung von mono-funktionalisierten Dialkylphosphinsäuren, -estern und -salzen zur Verfügung zu stellen.

Die Aufgabe wird gelöst durch ein Verfahren zur Herstellung von monofunktionaliserten Dialkylphosphinsäuren, -estern und -salzen, dadurch gekennzeichnet, dass man
a) eine Phosphinsäurequelle (I) 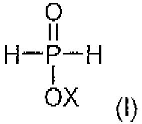 mit Olefinen (IV) 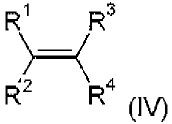 in Gegenwart eines Katalysators A zu einer Alkylphosphonigsäure, deren Salz oder Ester (II) 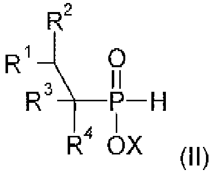 umsetzt,
b) die so entstandene Alkylphosphonigsäure, deren Salz oder Ester (II) mit Verbindungen, die C=C-, C=O- oder C=N-Doppelbindungen enthalten, zu Verbindungen (III) des Typs 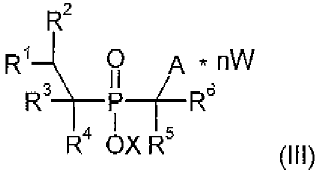 umsetzt, wobei R¹, R², R³, R⁴, R⁵, R⁶, gleich oder verschieden sind und unabhängig voneinander H, C₁-C₁₈-Alkyl, C₆-C₁₈-Aryl, C₆-C₁₈-Aralkyl, C₆-C₁₈-AlkylAryl bedeuten und X H, Ca, Mg, Al, Zn, Ti, Fe, Ce, Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin bedeutet und wobei A OH, NH₂ oder O-CO-R⁸ bedeutet und R⁸ die gleiche Bedeutung wie R¹ bis R⁶ hat und W Salzsäure, Schwefelsäure, Salpetersäure, Phosphorsäure, Phosphonsäure, Phosphinsäure, Ameisensäure, Essigsäure, Propionsäure, Buttersäure, Milchsäure, Palmsäure, Stearinsäure, Malonsäure, Maleinsäure, Fumarsäure, Weinsäure, Zitronensäure, Ascorbinsäure, Trimethylboran, Triethylboran, Tributylboran oder Triphenylboran bedeutet, wobei n für eine ganze oder gebrochene Zahl von 0 bis 4 steht und es sich bei dem Katalysator A um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen und wobei das Verfahren im Schritt b) ohne Einsatz eines Katalysators abläuft oder dass man aus Verbindungen der Formel (III), wenn A O-CO-R⁸ bedeutet, in Gegenwart eines Katalysators B die Gruppierung R⁸CO₂Y abspaltet, wobei es sich bei dem Katalysator B ausschließlich um Lithium, Lithiumhydrid, Lithiumaluminium-hydrid, Methyllithium, Butyllithium, tert.-Butyllithium, Lithiumdiisopropylamid, Natrium, Natriumhydrid, Natriumborhydrid, Natriumhydroxid, Natriummethanolat oder Natriumbutylat, Kaliumhydroxid, Kaliummethanolat, Kaliumethanolat oder Kaliumbutylat handelt.

Bevorzugt setzt man die nach Schritt b) erhaltene mono-funktionalisierte Dialkylphosphinsäure, deren Salz oder Ester (III) anschließend in einem Schritt c) mit Metallverbindungen von Mg, Ca, Al, Sb, Sn, Ge, Ti, Fe, Zr, Zn, Ce, Bi, Sr, Mn, Li, Na, K und/oder einer protonierte Stickstoffbase zu den entsprechenden mono-funktionalisierten Dialkylphosphinsäuresalzen (III) dieser Metalle und/oder einer Stickstoffverbindung um.

Bevorzugt wird die nach Schritt a) erhaltene Alkylphosphonigsäure, deren Salz oder Ester (II) und/oder die nach Schritt b) erhaltene mono-funktionalisierte Dialkylphosphinsäure, deren Salz oder Ester (III) und/oder die jeweils resultierende Reaktionslösung davon mit einem Alkylenoxid oder einem Alkohol M-OH und/oder M'-OH verestert, und der jeweils entstandene Alkylphosphonigsäureester (II) und/oder mono-funktionalisierte Dialkylphosphinsäurester (III) den weiteren Reaktionsschritten b) oder c) unterworfen.

Bevorzugt sind R¹, R², R³, R⁴, R⁵, R⁶, R⁸ gleich oder verschieden sind und bedeuten, unabhängig voneinander H, Methyl, Ethyl, n-Propyl, Isopropyl, n-Butyl, Isobutyl, tert. Butyl und/oder Phenyl.

Bevorzugt handelt es sich bei den Übergangsmetallen und/oder Übergangsmetallverbindungen um Rhodium, Nickel, Palladium, Platin und/oder Ruthenium.

Bevorzugt handelt es sich bei dem Alkohol der allgemeinen Formel M-OH um lineare oder verzweigte, gesättigte und ungesättigte, einwertige organische Alkohole mit einer Kohlenstoffkettenlänge von C₁-C₁₈ und bei dem Alkohol der allgemeinen Formel M'-OH um lineare oder verzweigte, gesättigte und ungesättigte, mehrwertige organische Alkohole mit einer Kohlenstoffkettenlänge von C₁-C₁₈.

Die Erfindung betrifft auch die Herstellung von von mono-funktionalisierten Dialkylphosphinsäuren, -estern und -salzen, nach einem oder mehreren der Ansprüche 1 bis 6 hergestellt und anschließende Verwendung dieser Produkte als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen, in Elektronikanwendungen, als Polymerisationskatalysator für Polyester, als copolykondensierbares Flammschutzmittel für Polyester- und Polyamidfasern, als Polyester Masterbatch, als Hitze-, Lichtstabilisator für Polymere, zur Faservorbehandlung und Faseroberflächenmodifizierung.

Die Erfindung betrifft auch die Herstellung von mono-funktionalisierten Dialkylphosphinsäuren, -salzen und -estern nach einem oder mehreren der Ansprüche 1 bis 6 hergestellt wurden und anschließende Verwendung dieser Produkte als Flammschutzmittel, insbesondere Flammschutzmittel für Klarlacke und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von ffammgeschützten Polymerformkörpern und/oder zum flammhemmend Ausrüsten von Polyester und Cellulose-Rein- und Mischgeweben durch Imprägnierung.

Bevorzugt ist m = 1 bis 10 und k = 2 bis 10. Bevorzugt steht n für 0, 1/4, 1/3, 1/2, 1, 2, 3 und 4.

Alle Umsetzungen können auch stufenweise ausgeführt werden; ebenso können in den verschiedenen Verfahrensschritten auch die jeweiligen resultierenden Reaktionslösungen eingesetzt werden.

Bevorzugte Verbindungen mit C=X-Doppelbindungen sind solche mit C=O-Doppelbindungen, hierbei sind Ketone des Typs R⁵R⁵C=O oder Aldehyde des Typs R⁵CHO bevorzugt.

Bevorzugt setzt man im Schritt b) die so entstandene Alkylphosphonigsäure, deren Salz oder Ester (II) zunächst mit Verbindungen, die C=C-, C=O- oder C=N-Doppelbindungen enthalten und nachfolgend mit NHR₂, NH₂R, NH₃ oder deren Salze um.

Alternativ setzt man im Schritt b) die so entstandene Alkylphosphonigsäure, deren Salz oder Ester (II) gleichzeitig mit Verbindungen, die C=C-, C=O- oder C=N-Doppelbindungen enthalten und mit NHR₂, NH₂R, NH₃ oder deren Salze um.

Bevorzugt wird aus Verbindungen der Formel (III), wenn A O-CO-R⁸ bedeutet, in Gegenwart eines Katalysators B die Gruppierung R⁸CO₂Y abgespaltetn

Bevorzugt bedeutet X H, Ca, Mg, Al, Zn, Ti, Fe, Ce, Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin.

Bevorzugt handelt es sich bei den Übergangsmetallen und/oder Übergangsmetallverbindungen um solche aus der siebten und achten Nebengruppe.

Bevorzugt bedeutet W Salzsäure, Schwefelsäure, Salpetersäure, Phosphorsäure, Phosphonsäure, Phosphinsäure, Ameisensäure, Essigsäure, Propionsäure, Buttersäure, Milchsäure, Palmsäure, Stearinsäure, Malonsäure, Maleinsäure, Fumarsäure, Weinsäure, Zitronensäure, Ascorbinsäure, Trimethylboran, Triethylboran, Tributylboran oder Triphenylboran.

Bevorzugt handelt es bei dem Katalysator B um Metalle, Metallhydride, Metallhydroxide und/oder Metallalkoholate.

Bevorzugt handelt es bei dem Katalysator B um Lithium, Lithiumhydrid, Lithiumaluminiumhydrid, Methyllithium, Butyllithium, tert-Butyllithium, Lithiumdiisopropylamid, Natrium, Natriumhydrid, Natriumborhydrid, Natriumhydroxid, Natriummethanolat, Natriumethanolat oder Natriumbutylat, Kaliumhydroxid, Kaliummethanolat, Kaliumethanolat oder Kaliumbutylat.

Die Erfindung umfasst auch flammgeschützte thermoplastische oder duroplastische Polymerformmasse, enthaltend 0,5 bis 45 Gew.-% mono-funktionalisierte Dialkylphosphinsäuren, -salze oder -ester, die nach einem oder mehreren der Ansprüche 1 bis 6 hergestellt wurden, 0,5 bis 99 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Schließlich betrifft die Erfindung noch flammgeschützte thermoplastische oder duroplastische Polymer-Formkörper, -Filme,- Fäden und -Fasern, enthaltend 0,5 bis 45 Gew.-% mono-funktionalisierte Dialkylphosphinsäuren, -salze oder -ester, die nach einem oder mehreren der Ansprüche 1 bis 6 hergestellt wurden, 0,5 bis 99 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Geeignete Aldehyde sind beispielsweise Acetaldehyd, Benzylglycerinaldehyd, Butyraldehyd, Decanal, Formaldehyd, Glutardialdehyd, Glyoxal, Glyoxylsäure, Glyoxylsäure-Monohydrat, Hexanal, Isobutyraldehyd, Laurinaldehyd, 3-Methylbutyraldehyd, Octanal, Önanthaldehyd, Paraformaldehyd, Pelargonaldehyd, 2-Phenylpropionaldehyd, 3-Phenylpropionaldehyd, Propionaldehyd, 2,5,7,7-Tetramethylocatal, Undecanal, Valeraldehyd, Citral, Citronellal, Crotonaldehyd, trans-2-Hexenal, alpha-Methylzimtaldehyd, trans-2-Pentenal, Zimtaldehyd, 4-Acetoxy-3-methoxybenzaldehyd, 2-Benzyloxybenzaldehyd, 2,4-Dihydroxybenzaldehyd, 2,3-Dihydroxybenzaldehyd, 2,5-Dimethoxybenzaldehyd, Ethylvanilin, 2-Hydroxy-3-methoxybenzaldehyd, 2-Hydroxy-4-methoxybenzaldehyd, 2-Hydroxy-5-methoxy-benzaldehyd, 2-Hydroxy-6-methoxybenzaldehyd, 3-Hydroxy-4-methoxybenzaldehyd, Salicylaldehyd, Benzaldehyd, 4-Acetamidobenzaldehyd, 4-Acetoxybenzaldehyd, Anthracen-9-carbaldehyd, Biphenyl-4-carbaldehyd, 4-Dimethylaminobenzaldehyd, 2,4-Dimethylbenzaldehyd, 3,5-Dimethylbenzaldehyd, Isophtaldialdehyd, 4-Isopropyl-benzaldehyd, 2-Methylbenzaldehyd, 3-Methylbenzaldehyd, 4-Methylbenzaldehyd, Naphthalin-1-carbaldehyd, Naphthalin-2-carbaldehyd, Phtalaldehydsäure, Phtaldialdehyd, Terephtalaldehydsäure, Terephtaldialdehyd, 2,4,6-Trimethylbenz-aldehyd, Furfural, Indol-3-carbaldehyd, 1-Methylpyrrol-2-carbaldehyd, Pyridin-2-carbaldehyd, Pyridin-3-carbaldehyd, Pyridin-4-carbaldehyd, Pyrrol-2-carbaldehyd.

Bevorzugte Ketone sind Aceton, Diisobutylketon, Methyl-n-propylketon; Methylethylketon, Methyl-i-butylketon.

Bevorzugte Aldehyde sind Acetaldehyd, Formaldehyd, Paraformaldehyd, Propionaldehyd, Benzaldehyd.

In einer alternativen Verfahrensgestaltung wird nach erfolgten Umsetzung im Schritt a) in einem Schritt b) die Verbindung (II) mit Verbindungen, die C=X-Doppelbindungen enthalten, in Gegenwart eines Katalysators B zunächt zu Verbindungen der Formel (III) - wobei A in Formel (III) ausschließlich O-CO-R⁸ bedeutet - umgesetzt und dann die Gruppierung R⁸CO₂Y abgespalten.

Die Abspaltung von R⁸CO₂Y von der mono-funktionalisierten Dialkylphosphinsäure, deren Salze und Ester (III) wird durch saure oder alkalische Hydrolyse unter Verwendung von Säuren oder Basen in Gegenwart von Wasser erreicht, wobei Y für H, Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase steht.

Für den Fall, dass die Verbindungen mit C=X-Doppelbindungen solche mit C=C-Doppelbindungen sind, sind solche des Typs R⁹R¹⁰C=C(R⁵)-O-CO(R⁸) bevorzugt, wobei R⁹ und R¹⁰ gleich oder verschieden sind und unabhängig voneinander H, C₁-C₁₈-Alkyl, C₆-C₁₈-Aryl, C₆-C₁₈-Aralkyl, C₆-C₁₈-Alkyl-Aryl, CN, CHO, OC(O)CH₂CN, CH(OH)C₂H₅, CH₂CH(OH)CH₃, 9-Anthracen, 2-Pyrrolidon, (CH₂)ₘOH, (CH₂)ₘNH₂, (CH₂)ₘNCS, (CH₂)ₘNC(S)NH₂, (CH₂)ₘSH, (CH₂)ₘS-2-thiazolin, (CH₂)ₘSiMe₃, CHR⁷(CH₂)ₘCH₃, C(O)R⁷, (CH₂)ₘC(O)R⁷, CH=CHR⁷ und/oder CH=CH-C(O)R⁷ bedeuten und wobei R⁷ für H, C₁-C₈-Alkyl oder C₆-C₁₈-Aryl steht und m eine ganze Zahl von 0 bis 10 bedeutet.

Bevorzugte Verbindungen mit C=C-Doppelbindungen sind Vinyl-, 1-Propenyl-, 1-Butenyl-acetat, -propionat, -butyrat, -pivalat, -benzoat, -cinnamat, -stearat, -laurat.

Bevorzugt wird der Katalysator B in Mengen von 0,05 bis 110 mol-% bezüglich der jeweiligen Verbindungen mit C=C-Doppelbindungen eingesetzt.

Bevorzugt wird der Katalysator B in Mengen von 0,001 bis 110 mol-%, bezogen auf die phosphorhaltige Verbindung (II), eingesetzt.

Geeignete Lösungsmittel sind die, wie sie in Verfahrensstufe a) eingesetzt werden.

Bevorzugt wird der Katalysator B mit einer Geschwindigkeit von 0,01 bis 110 mol-% Katalysator pro Stunde, bezogen auf die phosphorhaltige Verbindung (II), zudosiert.

Bevorzugt erfolgt die Umsetzung der Alkylphosphonigsäuren (II) mit Verbindungen mit C=C-Doppelbindungen bei einer Temperatur von 0 bis 250 °C, besonders bevorzugt bei 20 bis 200 °C und insbesondere bei 50 bis 150 °C.

Bevorzugt besteht die Atmosphäre bei der Umsetzung mit Verbindungen mit C=C-Doppelbindungen zu 50 bis 99,9 Gew.-% aus Bestandteilen des Lösungsmittels und Verbindungen mit C=C-Doppelbindungen, bevorzugt 70-95 %.

Wird ein mono-funktionalisiertes Dialkylphosphinsäuresalz (III) erhalten, kann dieses mit einer Mineralsäure zur entsprechenden Säure umgesetzt und mit einem Alkohol M-OH oder M'-OH oder einem Alkylenoxid verestert werden.

Wird eine mono-funktionalisierte Dialkylphosphinsäure (III) erhalten, kann dieses mit einer Base zu einem mono-funktionalisierter Dialkylphosphinsäuresalz umgesetzt werden.

Geeignete Mineralsäuren sind beispielsweise Salzsäure, Schwefelsäure, Salpetersäure oder Phosphorsäure oder Mischungen der Säuren.

Bevorzugt kann die saure oder alkalische Hydrolyse in Gegenwart von Wasser und eines inerten Lösungsmittles erfolgen. Geeignete inerte Lösungsmittel sind die in Verfahrensschritt a) genannten Lösungsmittel, bevorzugt sind niedermolekulare Alkohole mit 1 bis 6 Kohlenstoffatomen. Die Verwendung gesättigter, aliphatischer Alkohle ist besonders bevorzugt. Beispiele geeigneter Alkohle sind Methanol, Ethanol, Propanol, i-Propanol, Butanol, 2-Methyl-1-propanol, n-Pentanol, 2-Pentanol, 3-Pentanol, 2-Methyl-2-butanol, 3-Methyl-2-butanol, 2- Methyl-3-butanol, 3-Methyl-1-butanol oder 2-Methyl-1-butanol.

Bevorzugte Basen zur Durchführung der alkalischen Hydrolyse sind Metalle, Metallhydride und Metallalkoholate wie zum Beispiel Lithium, Lithiumhydrid, Lithiumaluminiumhydrid, Methyllithium, Butyllithium, t-Butyllithium, Lithiumdiisopropylamid, Natrium, Natriumhydrid, Natriumborhydrid, Natriummethanolat, Natriumethanolat oder Natriumbutylat, Kaliummethanolat, Kaliumethanolat oder Kaliumbutylat und zudem Natriumhydroxid, Kaliumhydroxid, Lithiumhydroxid, Bariumhydroxid und Ammoniumhydroxid. Bevorzugt werden Natriumhydroxid, Kaliumhydroxid und Bariumhydroxid eingesetzt.

Bevorzugte Mineralsäuren zur Druchführung der sauren Hydrolyse sind beispielsweise Schwefel-, Salpeter-, Salz,- Phosphorsäure oder Mischungen davon. Bevorzugt werden Schwefel- oder Salzsäure eingesetzt.

Bei der Durchführung der Hydrolyse ist die Gegenwart von Wasser wesentlich. Die Wassermenge kann von dem stöchiometrischen Bedarf als Mindestmenge bis zu einem Überschuss reichen.

Vorzugsweise erfolgt die Hydrolyse in einem Phosphor/Wasser-Molverhältnis von 1:1 bis 1:1.000, besonders bevorzugt von 1:1 bis 1:10.

Vorzugsweise erfolgt die Hydrolyse in einem Phosphor/Base bzw. Säure-Molverhältnis von 1:1 bis 1:300, besonders bevorzugt von 1,1 bis 1:20.

Die verwendete Alkoholmenge beträgt im Allgemeinen von 0,5 kg bis 1,5 kg pro kg der mono-funktionalisierten Dialkylphosphinsäure, deren Salze oder Ester (III), bevorzugt von 0,6 kg bis 1,0 kg.

Die Reaktionstemperatur beträgt 50 bis 140 °C, bevorzugt von 80 bis 130 °C.

Bevorzugt erfolgt die Umsetzung bei einem Gesamtdruck von 1 bis 100 bar, besonders bevorzugt bei einem Gesamtdruck von 1 bis 10 bar.

Bevorzugt beträgt die Reaktionszeit 0,2 bis 20 Stunden, besonders bevorzugt 1 bis 13 Stunden.

In einer weiteren Verfahrensvariante erfolgt im Schritt b) die Umsetzung von Verbindungen (II) mit Verbindungen, die C=X-Doppelbindungen enthalten und gleichzeitig oder nacheinander mit NHR₂, NH₂R, NH₃ oder ihrer Salze.

Geeignete Salze leiten sich aus der Umsetzung von NHR₂, NH₂R, NH₃ mit Salzsäure, Schwefelsäure, Salpetersäure oder Phosphorsäure, Phosphonsäure, Phosphinsäure, Ameisensäure, Essigsäure, Propionsäure, Buttersäure, Milchsäure, Palmsäure, Stearinsäure, Malonsäure, Maleinsäure, Fumarsäure, Weinsäure, Zitronensäure, Ascorbinsäure, Trimethylboran, Triethylboran, Tributylboran oder Triphenylboran ab.

Bevorzugte Vertreter von NH₂R sind NH₂Et, H₂NCH(C₆H₅)₂ oder ihre Salze.

Bevorzugt wird die Gruppe R aus den mono-funktionalisierten Dialkylphosphinsäuren, -estern oder -salzen (III) durch Reaktion mit Mineralsäuren oder durch Umsetzung mit Wasserstoff in Gegenwart eines Katalysators C abgespalten.

Bevorzugte Mineralsäuren zur Abspaltung der Gruppe R sind die weiter vorne genannten Mineralsäuren.

Die bevorzugte katalytische Abspaltung von R erfolgt mittels Wasserstoff in Gegenwart eines Katalysators C und ggf. eines Promotors.

Der Katalysator C, wie er für den Verfahrensschritt b) für die Umsetzung des mono-funktionalisierten Dialkylphosphinsäurederivats (III) mit Wasserstoff und ggf. eines Promotors zu den mono-funktionalisierten Dialkylphosphinsäurederivaten (III), kann bevorzugt der Katalysator A sein.

Zusätzlich zu den unter Katalysator A aufgelisteten Liganden können auch die folgenden Verbindungen eingesetzt werden:
Diphenyl-p-, -m- oder -o-tolylphosphit, Di-p-, -m- oder -o-tolylphenylphosphit, m-Tolyl-o-tolyl-p-tolylphosphit, o-Tolyl-p- oder -m-tolylphenylphosphit, Di-p-tolyl-m- oder -o-tolylphosphit, Di-m-tolyl-p- oder -o-tolylphosphit, Tri-m-, -p- oder -o-tolylphosphit, Di-o-tolyl-m- oder -p-tolylphosphit; Tris(2-ethylhexyl)-, Tribenzyl-, Trilauryl-, Tri-n-butyl-, Triethyl-, Tri-neo-pentyl-, Tri-i-propyl-, Tris(2,4-di-t-butylphenyl)-, tris(2,4-di-tert-butylphenyl)-, Diethyltrimethyl-silyl-, Diisodecylphenyl-, Dimethyltrimethylsilyl-, Triisodecyl-, Tris(tert-butyldimethylsilyl)-, Tris(2-chloroethyl-, Tris(1,1,1,3,3,3-hexafluoro-2-propyl)-, Tris(nonylphenyl)-, Tris(2,2,2-trifluoroethyl)-, Tris(trimethylsilyl)-, 2,2-Dimethyltrimethylen-phenyl-, Trioctadecyl-, Triimethylolpropan-, Benzyldiethyl-, (R)-Binaphthylisobutyl-, (R)-Binaphthylcyclopentyl-, (R)-Binaphthylisopropyl-, Tris(2-tolyl)-, Tris(nonylphenyl)- und Methyldiphenylphosphit; (11aR)-(+)-10,11,12,13-Tetrahydro-diindeno[7,1-de:1',7'-fg][1,3,2]dioxaaphosphocin-5-phenoxy, 4-Ethyl-2,6,7-trioxa-1-phosphabicyclo[2.2.2]octan, (11bR,11'bR)-4,4'-(9,9-Dimethyl-9H-xanthene-4,5-diyl)bis-dinaphtho[2,1-d:1',2'-f][1,3,2]dioxaphosphepin, (11bR, 11'bR)-4,4'-(Oxydi-2,1-phenylene)bis-dinaphtho[2,1-d:, 1', 2'-f][1,3,2]dioxaphosphepin, (11bS,11'bS)-4,4'-(9,9-Dimethyl-9H-xanthene-4,5-diyl)bis-dinaphtho[2,1-d:1',2'-f][1,3,2]dioxa-phosphepin, (11bS, 11'bS)-4,4'-(Oxydi2,1-phenylene)bis-dinaphtho[2,1-d: 1', 2'-f][1,3,2]dioxaphosphepin, 1,1'Bis[(11bR)- und 1,1'Bis[(11bS)-dinaphtho[2,1-d:1', 2'-f][1,3,2]dioxaphos-phepin-4-yl]ferrocen; Dimethylphenyl-, Diethylmethylp- und Diethylphenyl- und Diisopropylphenylphosphonit; Dimethylphenyl-, Diisopropylphenyl-, Ethyldiphenyl- und Methyldiphenylphosphinit.

Zusätzlich zu den unter Katalysator A aufgelisteten bidentaten Liganden können auch die folgenden Verbindungen eingesetzt werden:
1,2-Bis(diadamantylphosphinomethyl)benzol, 1,2-Bis(di-3,5-dimethyladamantyl-phosphinomethyl)benzol, 1,2-Bis(di-5-tert-butyladamantaylphosphinomethyl)benzol, 1,2-Bis(1-adamantyl tert-butyl-phosphinomethyl)benzol, 1-(Di-tertbutylphosphino-methyl)- und 1-(Diadamantylphosphinomethyl)-2-(phosphaadamantylphosphino-methyl)benzol, 1,2-Bis(di-tert-butylphosphinomethyl)-ferrocen, 1,2-Bis(dicyclohexyl-phosphinomethyl)-ferrocen, 1,2-Bis(di-isobutylphosphinomethyl)ferrocen, 1,2-Bis(dicyclopentylphosphinomethyl)ferrocen, 1,2-Bis-(diethylphosphinomethyl)-ferrocen, 1,2-Bis(diisopropylphosphinomethyl)ferrocen, 1,2-Bis(dimethylphosphinomethyl)ferrocen, 9,9-Dimethyl-4,5-bis(di-phenoxyphosphin)xanthen, 9,9-Dimethyl-4,5-bis(di-p-methylphenoxyphosphin)xanthen, 9,9-Dimethyl-4,5-bis(di-o-methylphenoxyphosphin)xanthen, 9,9-Dimethyl-4,5-bis(di-1,3,5-trimethylphenoxyphosphin)xanthen, 9,9-Dimethyl-4,5-bis(diphenoxyphosphin)-2,7-di-tert.-butylxanthen, 9,9-Dimethyl-4,5-bis(di-o-methylphenoxyphosphin)-2,7-di-tert.-butylxanthen, 9,9-Dimethyl-4,5-bis(di-p-methylphenoxyphosphin)-2,7-di-tert.-butyl-xanthen, , 9,9-Dimethyl-4,5-bis(di-1,3,5-trimethylphenoxyphosphin)-2,7-di-tert.-butylxanthen, 1,1'-Bis(diphenoxyphosphin)ferrocen, 1,1'-Bis(di-o-methylphenoxy) ferrocen, 1,1'-Bis(di-p-methylphenoxyphosphin)ferrocen, 1,1'-Bis(di-1,3,5-trimethylphenoxyphosphin)ferrocen, 2,2'-Bis(diphenoxyphosphin)-1,1'-binaphthyl, 2,2'-Bis(di-o-methylphenoxyphosphin)-1,1'-binaphthyl, 2,2'-Bis(di-p-methylphenoxyphosphin)-1,1'-binaphthyl, 2,2'-Bis(di-1,3,5-trimethylphenoxyphosphin)-1,1'-binaphthyl, (Oxydi-2,1-phenylen)bis(diphenoxyphosphin), (Oxydi-2,1-phenylen)bis(di-o-methylphenoxyphosphin), (Oxydi-2,1-phenylen)bis(di-p-methylphenoxyphosphin), (Oxydi-2,1-phenylen)bis(di-1,3,5-trimethylphenoxyphosphin), 2,2'-Bis(diphenoxyphosphin)-1,1'-biphenyl, 2,2'-Bis(di-o-methylphenoxyphosphin)-1,1'-biphenyl, 2,2'-Bis(di-p-methylphenoxyphosphin)-1,1'-biphenyl, 2,2'-Bis(di-1,3,5-trimethylphenoxyphosphin)-1,1'-biphenyl, 1,2-Bis(di-(1,3,5,7-tetramethyl-6,9,10-trioxa-2-phosphaadamantylmethyl)ferrocen, 1-(tert-Butoxycarbony1)-(2S,4S)-2-[(diphenyl-phosphino)methyl]-4-(dibenzophospholyl)pyrrolidin, 1-(tert-Butoxycarbonyl)-(2S,4S)-2-[(dibenzophospholyl)methyl]-4-(diphenylphosphino)pyrrolidin, 1-(tert-Butoxycarbonyl)-(2S,4S)-4-(dibenzophospholyl)-2-[(dibenzophospholyl)methyl]-pyrrolidin, BINAPHOS, Kelliphit, Chiraphit, Bis-3,4-diazophospholan; Bis(phospholan)liganden, wie Bis(2,5-transdialkylphospholan), Bis(2,4-trans-dialkylphosphethan), 1,2-Bis(phenoxyphos-phin)ethan, 1,2-Bis(3-methylphenoxyphosphin)ethan, 1,2-Bis(2-methylphenoxyphos-phin)ethan, 1,2-Bis(1-methylphenoxyphosphin)ethan, 1,2-Bis(1,3,5-trimethylphenoxyphos-phin)ethan, 1,3-Bis(phenoxyphosphin)propan, 1,3-Bis(3-methylphenoxyphosphin)propan, 1,3-Bis(2-methylphenoxyphosphin)propan, 1,3-Bis(1-methylphenoxyphosphin)propan, 1,3-Bis(1,3,5-trimethylphenoxyphosphin)propan,1,4-Bis(phenoxyphosphin)butan, 1,4-Bis(3-methylphenoxyphosphin)butan, 1,4-Bis(2-methylphenoxyphosphin)butan, 1,4-Bis(1-methylphenoxyphosphin)butan, 1,4-Bis(1,3,5-trimethylphenoxyphosphin)butan.

Bevorzugt beträgt der Anteil an Katalysator C bezogen auf die eingesetzte mono-funktionalisierte Dialkylphosphinsäure (III) 0,00001 bis 20 mol-%, besonders bevorzugt 0,0001 bis 10 mol-%.

Bevorzugt wird die Hydrierungsreaktion in Gegenwart eines Promotors durchgeführt, wobei als Promotoren Alkali- und Erdalkalimetallhydroxide und -alkoholate bevorzugt sind. Beispiele solcher Promotoren sind NaOH, KOH, Mg(OH)₂, Ca(OH)₂, Ba(OH)₂ sowie Natrium- oder Kaliummethanolat, Natriumethanolat oder Natriumbutylat, wobei NaOH, KOH besonders bevorzugt sind.

Das Verhältnis von Promoter zu Katalysator beträgt vorzugsweise etwa 0,001:1 bis 0,5:1, bevorzugt etwa 0,01:1 bis 0,2:1, besonders bevorzugt 0,04:1 bis 0,1:1.

Bevorzugt werden zunächst wenigstens ein Teil des Promotors und dann das Amin dem Katalysator und/oder der Lösung/Suspension, die der Katalysator enthält, zugegeben. Vorzugsweise werden wenigstens 10 Gew.-%, bevorzugt 20 Gew.-% und besonders bevorzugt 50 Gew.-% des Promotors zuerst zugesetzt.

Besonders bevorzugt werden 100 Gew.-% des Promotors zugesetzt.

Besonders bevorzugt werden die Übergangsmetalle in ihrem nullwertigen Zustand eingesetzt.

Bevorzugt wirkt der heterogen wirkende Katalysator während der Umsetzung als Suspension oder an eine feste Phase gebunden.

Bevorzugt erfolgt die Umsetzung in einem Lösungsmittel als Ein-Phasen-System in homogener oder heterogener Mischung und/oder in der Gasphase.

Geeignete Lösungsmittel sind die, wie sie weiter vorne in Verfahrensstufe a) werden.

Bevorzugt erfolgt die Umsetzung in einem Dialkylphosphinsäure-Lösungsmittel-Molverhältnis von 1:10.000 bis 1:0, besonders bevorzugt in einem Dialkylphosphinsäure-Lösungsmittel-Molverhältnis von 1:50 bis 1:1.

Bevorzugt erfolgt die Reaktion bei Temperaturen von 20 bis 200 °C und besonders bevorzugt von 40 bis 150 °C, insbesondere von 60 bis 100 °C.

Bevorzugt beträgt die Reaktionszeit 0,1 bis 20 Stunden.

Bevorzugt wird die Umsetzung unter dem Partialdruck des Wasserstoffes und/oder des Lösungsmittels durchgeführt.

Der Verfahrensschritt des erfindungsgemäßen Verfahrens wird vorzugsweise bei einem Partialdruck des Wasserstoffs von 0,1 bis 100 bar, besonders bevorzugt 0,5 bis 50 bar, insbesondere 1 bis 20 bar durchgeführt.

Der Verfahrensschritt des erfindungsgemäßen Verfahrens wird vorzugsweise bei einem absoluten Druck von 0,1 bis 150 bar, besonders bevorzugt 0,5 bis 70 bar, insbesondere 1 bis 30 bar durchgeführt.

Die erfindungsgemäße Hydrierung kann in flüssiger Phase, in der Gasphase oder auch in überkritischer Phase durchgeführt werden. Dabei wird der Katalysator bei Flüssigkeiten vorzugsweise homogen oder als Suspension eingesetzt, während bei Gasphasen- oder überkritischer Fahrweise eine Festbettanordnung von Vorteil ist.

Für den Fall, dass es sich bei den Verbindungen mit C=X-Doppelbindungen um C=N-Doppelbindungen handelt, sind solche des Typs R⁵R⁶C=NR⁷bevorzugt.

Bevorzugte Verbindungen des Typs R⁵R⁶C=NR⁷ sind Imine, wie Hexamin, Benzophenonimin, 2,2,4,4-Tetramethyl-3-pentanonimin, N-Benzylidenmethylamin und N-Trimethylsilylbenzaldimin.

Bevorzugt wird R⁷ aus den mono-funktionalisierten Dialkylphosphinsäuren, -estern oder -salzen (III) durch Reaktion mit Mineralsäuren oder durch Umsetzung mit Wasserstoff in Gegenwart eines Katalysators C abgespalten.

Bevorzugt handelt es sich bei den Übergangsmetallen für den Katalysator A um Elemente der siebten und achten Nebengruppe (nach moderner Nomenklatur ein Metall der Gruppe 7, 8, 9 oder 10), wie etwa Rhenium, Ruthenium, Cobalt, Rhodium, Iridium, Nickel, Palladium und Platin.

Bevorzugt werden als Quelle der Übergangsmetalle und Übergangsmetallverbindungen deren Metallsalze verwendet. Geeignete Salze sind solche von Mineralsäuren, die die Anionen Fluorid, Chlorid, Bromid, Iodid, Fluorat, Chlorat, Bromat, Iodat, Fluorit, Chlorit, Bromit, lodit, Hypofluorit, Hypochlorit, Hypobromit, Hypoiodit, Perfluorat, Perchlorat, Perbromat, Periodat, Cyanid, Cyanat, Nitrat, Nitrid, Nitrit, Oxid, Hydroxid, Borat, Sulfat, Sulfit, Sulfid, Persulfat, Thiosulfat, Sulfamat, Phosphat, Phosphit, Hypophosphit, Phosphid, Carbonat und Sulfonat, wie etwa Methansulfonat, Chlorosulfonat, Fluorosulfonat, Trifluoromethansulfonat, Benzolsulfonat, Naphthyl-sulfonat, Toluolsulfonat, t-Butylsulfonat, 2-Hydroxypropansulfonat und sulfonierte lonentauscherharze; und/oder organische Salze, wie etwa Acetylacetonate und Salze einer Carbonsäure mit bis zu 20 Kohlenstoffatomen, wie etwa Format, Acetat, Propionat, Butyrat, Oxalat, Stearat und Zitrat einschliesslich halogenierter Carbonsäuren mit bis zu 20 Kohlenstoffatomen, wie etwa Trifluoracetat, Trichloracetat, enthalten.

Eine weitere Quelle der Übergangsmetalle und Übergangsmetallverbindungen stellen Salze der Übergangsmetalle mit Tetraphenylborat- und halogenierten Tetraphenylboratanionen, wie etwa Perfluorophenylborat, dar.

Geeignete Salze beeinhalten ebenso Doppelsalze und Komplexsalze bestehend aus einem oder mehreren Übergangsmetallionen und unabhängig voneinander ein oder mehrere Alkalimetall-, Erdalkalimetall-, Ammonium-, organische Ammonium-, Phosphonium- und organische Phosphoniumionen und unabhängig voneinander ein oder mehrere oben genannter Anionen. Geeignete Doppelsalze stellen z. B. Ammoniumhexachloropalladat und Ammoniumtetrachloropalladat dar.

Bevorzugt ist eine Quelle der Übergangsmetalle das Übergangsmetall als Element und/oder eine Übergangsmetallverbindung in dessen null-wertigem Zustand.

Bevorzugt wird das Übergangsmetall metallisch eingesetzt oder als Legierung mit weiteren Metallen verwendet, wobei hier bevorzugt Bor, Zirconium, Tantal, Wolfram, Rhenium, Kobalt, Iridium, Nickel, Palladium, Platin und/oder Gold ist. Dabei ist der Übergangsmetallgehalt in der eingesetzten Legierung bevorzugt 45 - 99,95 Gew.-%.

Bevorzugt wird das Übergangsmetall mikrodispers (Teilchengröße 0,1 mm - 100 µm) eingesetzt.

Bevorzugt wird das Übergangsmetall auf einem Metalloxid wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur, auf einem Metallcarbonat wie etwa Bariumcarbonat, Calciumcarbonat, Strontiumcarbonat, auf einem Metallsulfat wie etwa Bariumsulfat, Calciumsulfat, Strontiumsulfat, auf einem Metallphosphat wie etwa Aluminiumphosphat, Vanadiumphosphat, auf einem Metallcarbid wie etwa Siliconcarbid, auf einem Metallaluminat wie etwa Calciumaluminat, auf einem Metallsilikat wie etwa Aluminiumsilikat, Kreiden, Zeolithe, Bentonit, Montmorillonit, Hectorit, auf funktionalisierten Silikaten, funktionalisierten Silikagelen wie etwa SiliaBond^{®}, QuadraSil™, auf funktionalisierten Polysiloxanen wie etwa Deloxan^{®}, auf einem Metallnitrid, auf Kohle, Aktivkohle, Mullite, Bauxite, Antimonite, Scheelite, Perovskite, Hydrotalcite, Heteropolyanionen, auf funktionalisierter und unfunktionalisierter Cellulose, Chitosan, Keratin, Heteropolyanionen, auf Ionentauschern wie etwa Amberlite™, Amberjet™, Ambersep™, Dowex^{®}, Lewatit^{®}, ScavNet^{®}, auf funktionalisierten Polymeren wie etwa Chelex^{®}, QuadraPure™, Smopex^{®}, PolyOrgs^{®}, auf polymergebundenen Phosphanen, Phosphanoxiden, Phosphinaten, Phosphonaten, Phosphaten, Aminen, Ammoniumsalzen, Amiden, Thioamiden, Harnstoffen, Thioharnstoffen, Triazinen, Imidazolen, Pyrazolen, Pyridinen, Pyrimidinen, Pyrazinen, Thiolen, Thiolether, Thiolester, Alkoholen, Alkoxiden, Ether, Ester, Carbonsäuren, Acetaten, Acetalen, Peptiden, Hetarenen, Polyethylenimin/Siliciumdioxid und/oder Dendrimeren geträgert verwendet.

Geeignete Quellen der Metallsalze und/oder Übergangsmetalle stellen bevorzugt ebenfalls deren Komplexverbindungen dar. Komplexverbindungen der Metallsalze und/oder Übergangsmetalle setzen sich aus den Metallsalzen bzw. Übergangsmetalle und einem oder mehreren Komplexbildnern zusammen. Geeignete Komplexbildner sind z. B. Olefine, Diolefine, Nitrile, Dinitrile, Kohlenmonoxid, Phosphine, Diphosphine, Phosphite, Diphosphite, Dibenzylidenaceton, Cyclopentadienyl, Indenyl oder Styrol. Geeignete Komplexverbindungen der Metallsalze und/oder Übergangsmetalle können auf den oben genannten Trägermaterialien geträgert sein.

Bevorzugt ist der Gehalt an den genannten geträgerten Übergangsmetallen 0,01 bis 20 Gew.-%, vorzugsweise 0,1 bis 10 Gew.-%, insbesondere 0,2 bis 5 Gew.-%, bezogen auf die Gesamtmasse des Trägermaterials.

Geeignete Quellen von Übergangsmetallen und Übergangsmetallverbindungen sind beispielsweise Palladium, Platin, Nickel, Rhodium; Palladium Platin, Nickel oder Rhodium,auf Alumina, auf Silika, auf Bariumcarbonat, auf Bariumsulfat, auf Calciumcarbonat, auf Strontiumcarbonat, auf Kohle, auf Aktivkohle; Platin-Palladium-Gold-, Aluminum-Nickel-, Eisen-Nickel-, Lanthanoid-Nickel, Zirconium-Nickel-, Platin-Iridium-, Platin-Rhodium-Legierung; Raney^{®}-Nickel, Nickel-Zink-Eisen-Oxid; Palladium(II)-, Nickel(II)- ,Platin(II)-, Rhodiumchlorid, -bromid, -iodid, -fluorid, -hydrid, -oxid, -peroxid, -cyanid, -sulfat, -nitrat, -phosphid, -borid, -chromoxid, -cobaltoxid, -carbonathydroxid, -cyclohexanbutyrat, -hydroxid, -molybdat, -octanoat, -oxalat, -perchlorat, -phthalocyanin, -5,9,14,18,23,27,32,36-octabutoxy-2,3-naphthalocyanin, -sulfamat, -perchlorat, -thiocyanat, -bis(2,2,6,6-tetramethyl-3,5-heptanedionat), -propionat, -acetat, -stearat, -2-ethylhexanoat, -acetylacetonat, -hexafluoroacetylacetonat, -tetrafluoroborat, -thiosulfat, -trifluoroacetat, -phthalocyanintetrasulfonsäure Tetranatriumsalz, -methyl, -cyclopenta-dienyl, -methylcyclopentadienyl, -ethylcyclopentadienyl, -pentamethylcyclopentadienyl, -2,3,7,8,12,13,17,18-octaethyl-21H,23H-porphin, -5,10,15,20-tetraphenyl-21H,23H-porphin, -bis(5-[[4-(dimethylamino)phenyl]imino]-8(5H)-quinolinon), -2,11,20,29-tetra-tert-butyl-2,3-naphthalocyanin, -2,9,16,23-tetraphenoxy-29H,31H-phthalocyanin, -5,10,15,20-tetrakis(pentafluorophenyl)-21H,23H-porphin und deren 1,4-Bis(diphenylphosphin)butan-, 1,3-Bis(diphenylphosphino)propan-, 2-(2'-Di-tert-butylphosphin)biphenyl-, Acetonitril-, Benzonitril-, Ethylendiamin-, Chloroform-, 1,2-Bis(phenylsulfinyl)ethan-, 1,3-Bis(2,6-diisopropylphenyl)imidazoliden)(3-chloropyridyl)-, 2'-(Dimethylamino)-2-biphenylyl-, Dinorbornylphosphin-, 2-(Dimethylamino-methyl)ferrocen-, Allyl-, Bis(Diphenylphos-phino)butan-, (N-succinimidyl)bis-(triphenylphosphin)-, Dimethylphenylphosphin-, Methyldiphenylphosphin-, 1,10-Phenanthrolin-, 1,5-Cyclooctadien-, N,N,N',N'-Tetra-methylethylendiamin-, Triphenylphosphin-, Tri-o-tolylphosphin-, Tricyclohexylphosphin-, Tributylphosphin-, Triethylphosphin-, 2,2'-Bis(diphenylphosphino)-1,1'-binaphthyl-, 1,3-Bis(2,6-diisopropylphenyl)imidazol-2-yliden-, 1,3-Bis(mesityl)imidazol-2-yliden-, 1,1'-Bis(di-phenylphosphino)ferrocen-, 1,2-Bis(diphenylphosphino)ethan-, N-Methylimi-dazol-, 2,2'-Bipyridin-, (Bicyclo[2.2.1]-hepta-2,5-dien)-, Bis(di-tert-butyl(4-dimethylamino-phenyl)phosphin)-, Bis(tert.-butylisocyanid)-, 2-Methoxyethylether-, Ethylenglycoldimethyl-ether-, 1,2-Dimethoxyethan-, Bis(1,3-diamino-2-propanol)-, Bis(N,N-diethylethylendiamin)-, 1,2-Diaminocyclohexan-, Pyridin-, 2,2':6',2"-terpyridin-, Diethylsulfid-, Ethylen-, Amin-Komplexe; Kaiium-, Natrium-, Ammoniumhexachloropalladat(IV), Kalium-, Natrium-, Ammoniumtetrachloropalladat(II), Bromo(tri-tert-butylphosphin)palladium(I) Dimer, (2-Methylallyl)palladium(II)chlorid Dimer, Bis(dibenzylidenaceton)palladium(0), Tris(di-benzylidenaceton)dipalladium(0), Tetrakis(triphenylphosphin)palladium(0), Tetrakis-(tricyclohexylphosphin)palladium (0), Bis[1,2-bis(diphenylphosphin)ethan]-palladium(0), Bis(3,5,3',5'-dimethoxydibenzylidenaceton)palladium(0), Bis(tri-tert-butylphos-phin)palladium(0), meso-Tetraphenyltetrabenzoporphin Palladium, Tetrakis(methyldi-phenylphosphin)palladium(0), Tris(3,3',3"-phophinidyn-tris(benzolsulfonato)palladium(0) Nonanatriumsalz, 1,3-Bis(2,4,6-trimethylphenyl)-imidazol-2-yliden(1,4-naphtho-quinon)palladium(0), 1,3-Bis(2,6-diisopropylphenyl)-imidazol-2-yliden(1,4-naphtho-quinon)palladium(0), und deren Chloroform-Komplex;
Allylnickel(II)chlorid Dimer, Ammoniumnickel(II)sulfat, Bis(1,5-cyclooctadien)nickel(0), Bis(triphenylphosphin)dicarbonylnickel(0), Tetrakis(triphenylphosphin)nickel(0), Tetrakis(triphenylphosphit)nickel(0), Kaliumhexafluoronickelat(IV), Kaliumtetracyano-nickelat(II), Kaliumnickel(IV)paraperiodat, Dilithiumtetrabromonickelat(II), Kaliumtetracyanonickelat(II);
Platin(IV)chlorid, -oxid, -sulfid, Kalium-, Natrium-, Ammoniumhexachloroplatinat(IV), Kalium-, Ammoniumtetrachloroplatinat(II), Kaliumtetracyanoplatinat(II), Trimethyl(methylcyclopentadienyl)platin(IV), cis-Diammintetrachloroplatin(IV), Kaliumtrichloro(ethylen)platinat(II), Natriumhexahydroxyplatinat(IV), Tetraaminplatin(II)tetrachloroplatinat(II), Tetrabutylammoniumhexachloroplatinat(IV), Ethylenbis(triphenylphosphin)platin(0), Platin(0)-1,3-divinyl-1,1,3,3-tetramethyldisiloxan, Platin(0)-2,4,6,8-tetramethyl-2,4,6,8-tetravinylcyclotetrasiloxan, Tetrakis(triphenyl-phosphin)platin(0), Platinoctaethylporphyrin, Chloroplatinsäure, Carboplatin; Chlorobis(ethylen)rhodium Dimer, Hexarhodiumhexadecacarbonyl, Chloro(1,5-cyclooctadien)rhodium Dimer, Chloro(norbomadien)-rhodium Dimer, Chloro(1,5-hexadien)rhodium Dimer.

Bevorzugt handelt es sich bei den Liganden um Phosphine der Formel (V)

PR¹¹₃ (V)

in der die Reste R¹¹ unabhängig voneinander für Wasserstoff, geradkettiges, verzweigtes oder cyclisches C₁-C₂₀-Alkyl, C₆-C₂₀-Alkylaryl, C₂-C₂₀-Alkenyl, C₂-C₂₀-Alkinyl, C₁-C₂₀-Carboxylat, C₁-C₂₀-Alkoxy, C₂-C₂₀-Alkenyloxy, C₂-C₂₀-Alkinyloxy, C₂-C₂₀-Alkoxycarbonyl, C₁-C₂₀-Alkylthio, C₁-C₂₀-Alkylsulfonyl, C₁-C₂₀-Alkylsulfinyl, Silyl und/oder deren Derivative und/oder durch wenigstens ein R¹² substituiertes Phenyl- oder durch wenigstens ein R¹² substituiertes Naphtyl stehen. R¹² steht unabhängig voneinander für Wasserstoff, Fluor, Chlor, Brom, Iod, NH₂, Nitro, Hydroxy, Cyano, Formyl, geradkettiges, verzweigtes oder cyclisches C₁-C₂₀-Alkyl, C₁-C₂₀-Alkoxy, HN(C₁-C₂₀-Alkyl), N(C₁-C₂₀-Alkyl)₂, -CO₂-(C₁-C₂₀-Alkyl), -CON(C₁-C₂₀-Alkyl)₂, -OCO(C₁-C₂₀-Alkyl), NHCO(C₁-C₂₀-Alkyl), C₁-C₂₀-Acyl, -SO₃M, -SO₂N(R¹³)M, -CO₂M, -PO₃M₂, -AsO₃M₂, -SiO₂M, -C(CF₃)₂OM (M = H, Li, Na oder K), wobei R¹³ Wasserstoff, Fluor, Chlor, Brom, Iod, geradkettiges, verzweigtes oder cyclisches C₁-C₂₀-Alkyl, C₂-C₂₀-Alkenyl, C₂-C₂₀-Alkinyl, C₁-C₂₀-Carboxylat, C₁-C₂₀-Alkoxy, C₂-C₂₀-Alkenyloxy, C₂-C₂₀-Alkinyloxy, C₂-C₂₀-Alkoxycarbonyl, C₁-C₂₀-Alkylthio, C₁-C₂₀-Alkylsulfonyl, C₁-C₂₀-Alkylsulfinyl, Silyl und/oder deren Derivative, Aryl, C₆-C₂₀-Arylalkyl, C₆-C₂₀-Alkylaryl, Phenyl und/oder Biphenyl bedeutet. Vorzugsweise sind alle Gruppen R¹¹ identisch.

Geeignete Phosphine (V) sind beispielsweise Trimethyl-, Triethyl-, Tripropyl-, Triisopropyl-, Tributyl-, Triisobutyl-, Triisopentyl-, Trihexyl-, Tricyclohexyl-, Trioctyl-, Tridecyl-, Triphenyl-, Diphenylmethyl-, Phenyldimethyl-, Tri(o-tolyl)-, Tri(p-tolyl)-, Ethyldiphenyl-, Dicyclohexyl-phenyl-, 2-Pyridyldiphenyl-, Bis(6-methyl-2pyridyl)-phenyl-, Tri-(p-chlorophenyl)-, Tri-(p-methoxyphenyl)-, Diphenyl(2-sulfonatophenyl)phosphin; Kalium-, Natrium- und Ammoniumsalze von Diphenyl(3-sulfonatophenyl)phosphin, Bis(4,6-dimethyl-3-sulfonatophenyl)(2,4-dimethylphenyl)phosphin, Bis(3-sulfonato-phenyl)phenylphosphinen, Tris(4,6-dimethyl-3-sulfonatophenyl)phosphinen, Tris(2-sulfonatophenyl)phosphinen, Tris(3-sulfonatophenyl)phosphinen; 2-Bis(diphenylphosphinoethyl)trimethyl-ammoniumiodid, 2'-Dicyclohexylphosphino-2,6-dimethoxy-3-sulfonato-1,1'-biphenyl Natriumsalz, Trimethylphosphit und/oder Triphenylphosphit.

Besonders bevorzugt handelt es sich bei den Liganden um bidentate Liganden der allgemeinen Formel

R¹¹M"-Z-M" R¹¹ (VI).

In dieser Formel repräsentieren M" unabhängig voneinander N, P, As oder Sb. Bevorzugt sind die beiden M" gleich und besonders bevorzugt steht M" für ein Phosphoratom.

Jede Gruppe R¹¹ repräsentiert unabhängig voneinander die unter Formel (V) beschrieben Reste. Vorzugsweise sind alle Gruppen R¹¹ identisch.

Z stellt bevorzugt eine bivalente Überbrückungsgruppe dar, die wenigstens 1 Brückenatom enthält, wobei bevorzugt 2 bis 6 Brückenatome enthalten sind.

Brückenatome können ausgewählt werden aus C-, N-, O-, Si- und S-Atomen. Bevorzugt ist Z eine organische Überbrückungsgruppe, die wenigstens ein Kohlenstoffatom enthält. Bevorzugt ist Z eine organische Überbrückungsgruppe, die 1 bis 6 Brückenatome enthält, wovon wenigstens zwei Kohlenstoffatome sind, die unsubstituiert oder substituiert sein können.

Bevorzugte Gruppen Z sind -CH₂-, -CH₂-CH₂-, -CH₂-CH₂-CH₂-, -CH₂-CH(CH₃)-CH₂-, -CH₂-C(CH₃)₂-CH₂-, -CH₂-C(C₂H₅)-CH₂-, -CH₂-Si(CH₃)₂-CH₂-, -CH₂-O-CH₂-, -CH₂-CH₂-CH₂-CH₂-, -CH₂-CH(C₂H₅)-CH₂-, -CH₂-CH(n-Pr)-CH und -CH₂-CH(n-Bu)-CH₂-, unsubstituierte oder substituierte 1,2-Phenyl-, 1,2-Cyclohexyl-, 1,1'- oder 1,2-Ferrocenyl-Reste, 2,2'-(1,1'-Biphenyl)-, 4,5-Xanthen- und/oder Oxydi-2,1-phenylen-Reste.

Geeignete bidentate Phosphinliganden (VI) sind beispielsweise 1,2-Bis(dimethyl-), 1,2-Bis(diethyl-), 1,2-Bis(dipropyl-), 1,2-Bis(diisopropyl-), 1,2-Bis(dibutyl-), 1,2-Bis(di-tert.-butyl-), 1,2-Bis(dicyclohexyl-) und 1,2-Bis(diphenylphosphino)ethan; 1,3-Bis(dicyclohexyl-), 1,3-Bis(diisopropyl-), 1,3-Bis(di-tert.-butyl-) und 1,3-Bis(diphenyl-phosphino)propan; 1,4-Bis-(diisopropyl-) und 1,4-Bis(diphenylphosphino)butan; 1,5-Bis(dicyclohexylphosphino)pentan; 1,2-Bis(di-tert.-butyl-), 1,2-Bis(di-phenyl-), 1,2-Bis(di-cyclohexyl-), 1,2-Bis(dicyclo-pentyl-), 1,3-Bis(di-tert.-butyl-), 1,3-Bis(diphenyl-), 1,3 Bis(di-cyclohexyl-) und 1,3-Bis(dicyclopentylphosphino)benzol; 9,9-Dimethyl-4,5-bis(diphenylphosphino)xanthen, 9,9-Dimethyl-4,5-bis(diphenylphosphino)-2,7-di-tert.-butylxanthen, 9,9-Dimethyl-4,5-bis(di-tert.-butylphosphino)xanthen, 1,1'-Bis(diphenylphos-phino)-ferrocen, 2,2'-Bis(diphenylphosphino)-1,1'-binaphthyl, 2,2'-Bis(di-p-tolylphosphino)-1,1'-binaphthyl, (Oxydi-2,1-phenylen)bis(diphenylphosphin), 2,5-(Di-isopropylphos-pholano)benzol, 2,3-O-Isopropropyliden-2,3-dihydroxy-1,4-bis(diphenylphosphino)butan, 2,2'-Bis(di-tert.-butylphosphino)-1,1'-biphenyl, 2,2'-Bis(dicyclohexylphosphino)-1,1'-biphenyl, 2,2'-Bis(diphenylphosphino)-1,1'-biphenyl, 2-(Di-tert.-butylphosphino)-2'-(N,N-dimethylamino)biphenyl, 2-(Dicyclohexylphosphino)-2'-(N,N-dimethylamino)biphenyl, 2-(Diphenylphosphino)-2'-(N,N-dimethylamino)biphenyl, 2-(Diphenylphosphino)ethylamin, 2-[2-(Diphenylphosphino)ethyl]pyridin; Kalium-, Natrium- und Ammoniumsalze von 1,2-Bis(di-4-sulfonatophenylphosphino)-benzol, (2,2'-Bis[[bis(3-sulfonato-phenyl)phos-phino]methyl]-4,4',7,7'-tetrasulfonato-1,1'-binapthyl, (2,2'-Bis[[bis(3-sulfonatophenyl)phos-phino]methyl]-5,5'-tetrasulfonato-1,1'-biphenyl, (2,2'-Bis [[bis(3-sulfonatophenyl)phosphino]methyl]-1,1'-binapthyl, (2,2'-Bis[[bis(3-sulfonatophenyl)phosphino]-methyl]-1,1'-biphenyl, 9,9-Dimethyl-4,5-bis(diphenylphosphino)-2,7-sulfonatoxanthen, 9,9-Dimethyl-4,5-bis(di-tert.-butylphosphino)-2,7-sulfonatoxanthen, 1,2-Bis(di-4-sulfonatophenylphosphino)-benzol, Meso-tetrakis(4-sulfonatophenyl)porphin, Meso-tetrakis(2,6-dichloro-3-sulfonatophenyl)porphin, Meso-tetrakis(3-sulfonatomesityl)porphin, Tetrakis(4-carboxyphenyl)porphin und 5,11,17,23-Sulfonato-25,26,27,28-tetrahydroxycalix[4]aren.

Zudem können die Liganden der Formel (V) und (VI) durch die Reste R¹¹ und/oder die Überbrückungsgruppe an ein geeignetes Polymer oder anorganisches Substrat gebunden sein.

Das Katalysatorsystem hat ein Übergangsmetall-Ligand-Molverhältnis von 1:0,01 bis 1:100, bevorzugt von 1:0,05 bis 1:10 und insbesondere von 1:1 bis 1:4.

Bevorzugt erfolgen die Umsetzungen in den Verfahrensstufen a), b) und ggf. c) wahlweise in einer Atmosphäre, die weitere gasförmige Bestandteile wie zum Beispiel Stickstoff, Sauerstoff, Argon, Kohlendioxid enthält; die Temperatur beträgt -20 bis 340 °C, insbesondere 20 bis 180 °C und der Gesamtdruck von 1 bis 100 bar.

Die Isolierung der Produkte und/oder der Komponente und/oder des Übergangsmetalls und/oder der Übergangsmetallverbindung und/oder Katalysatorsystems und/oder des Liganden und/oder der Edukte nach den Verfahrensstufen a), b) und c) erfolgt wahlweise durch Destillation oder Rektifikation, durch Kristallisation oder Fällen, durch Filtration oder Zentrifugieren, durch Adsorption oder Chromatographie oder anderen bekannten Methoden.

Erfindungsgemäß werden Lösungsmittel, Hilfsmittel und ggf. andere flüchtige Bestandteile durch z. B. Destillation, Filtration und/oder Extraktion abgetrennt.

Bevorzugt erfolgt die Umsetzungen in den Verfahrensstufen a), b) und ggf. c) wahlweise in Absorptionskolonnen, Sprühtürmen, Blasensäulen, Rührkesseln, Rieselbettreaktoren, Strömumgsrohren, Schlaufenreaktoren und/oder Knetern.

Geeignete Mischorgane sind z. B. Anker-, Blatt-, MIG-, Propeller-, Impeller-, Turbinen-, Kreuz-Rührer, Dispergierscheiben, Hohl-(Begasungs-)-Rührer, Rotor-Stator-Mischer, statische Mischer, Venturi-Düsen und/oder Mammutpumpen.

Bevorzugt erfahren die Reaktionslösungen/-mischungen dabei eine Mischintensität, die einer Rotations-Reynolds-Zahl von 1 bis 1.000.000, bevorzugt von 100 bis 100.000 entspricht.

Bevorzugt erfolgt eine intensive Durchmischung der jeweiligen Reaktionspartner etc. unter einem Energieeintrag von 0,080 bis 10 kW/m³, bevorzugt 0,30 - 1,65 kW/m³.

Bevorzugt wirkt der jeweilige Katalysator A während der Umsetzung homogen und/oder heterogen. Daher wirkt der jeweils heterogen wirkende Katalysator während der Umsetzung als Suspension oder an eine feste Phase gebunden.

Bevorzugt wird der Katalysator A vor der Umsetzung und/oder zu Beginn der Umsetzung und/oder während der Umsetzung in situ generiert.

Bevorzugt erfolgt die jeweilige Umsetzung in einem Lösungsmittel als Ein-Phasen-System in homogener oder heterogener Mischung und/oder in der Gasphase.

Wird ein Mehr-Phasen-System verwendet kann zusätzlich ein Phasentransferkatalysor eingesetzt werden.

Die erfindungsgemäßen Reaktionen können in flüssiger Phase, in der Gasphase oder in überkritischer Phase durchgeführt werden. Dabei wird der Katalysator A bei Flüssigkeiten vorzugsweise homogen oder als Suspension eingesetzt, während bei Gasphasen- oder überkritischer Fahrweise eine Festbettanordnung von Vorteil ist.

Geeignete Lösungsmittel für die erfindungsgemäßen Verfahren sind Wasser, Alkohole wie z. B. Methanol, Ethanol, i-Propanol, n-Propanol, n-Butanol, i-Butanol, t-Butanol, n-Amylalkohol, i-Amylalkohol, t-Amylalkohol, n-Hexanol, n-Octanol, i-Octanol, n-Tridecanol, Benzylalkohol etc. Bevorzugt sind weiterhin Glycole wie z.B. Ethylenglycol, 1,2-Propandiol, 1,3-Propandiol, 1,3-Butandiol, 1,4-Butandiol, Diethylenglycol etc.; aliphatische Kohlenwasserstoffe wie Pentan, Hexan, Heptan, Octan, und Petrolether, Petroleumbenzin, Kerosin, Petroleum, Paraffinöl etc.; aromatische Kohlenwasserstoffe wie Benzol, Toluol, Xylol, Mesitylen, Ethylbenzol, Diethylbenzol etc.; Halogenkohlenwasser-stoffe wie Methylenchlorid, Chloroform, 1,2-Dichloroethan, Chlorobenzol, Tetrachlorkohlenstoff, Tetrabromoethylen etc.; alicyclische Kohlenwasserstoffe wie Cyclopentan, Cyclohexan und Methylcyclohexan etc.; Ether wie Anisol (Methylphenylether), t-Butylmethylether, Dibenzylether, Diethylether, Dioxan, Diphenylether, Methylvinylether, Tetrahydrofuran, Triisopropylether etc.; Glycolether wie Diethylenglycoldiethylether, Diethylenglycoldimethylether (Diglyme), Diethylenglycolmonobutylether, Diethylenglycolmonomethylether, 1,2-Dimethoxyethan (DME Mono-glyme), Ethylenglycolmonobutylether, Triethylenglycoldimethylether (Triglyme), Triethylenglycolmonomethylether etc.; Ketone wie Aceton, Diisobutylketon, Methyl-n-propylketon; Methylethylketon, Methyl-i-butylketon etc; Ester wie Methylformat, Methylacetat, Ethylacetat, n-Propylacetat und n-Butylacetat etc.; Carbonsäuren wie Ameisensäure, Essigsäure, Propionsäure, Buttersäure etc.; einzeln oder in Kombination miteinander.

Geeignete Lösungsmittel sind auch die eingesetzten Olefine und Phosphinsäurequellen. Diese bieten Vorteile in Form einer höheren Raum-Zeit-Ausbeute.

Bevorzugt wird die Umsetzung unter dem eigenen Dampfdruck des Olefins und/oder des Lösungsmittels durchgeführt.

Bevorzugt sind R¹, R², R³, R⁴ des Olefins (IV) gleich oder verschieden und bedeuten, unabhängig voneinander, H, Methyl, Ethyl, n-Propyl, Isopropyl, n-Butyl, Isobutyl, tert.-Butyl und/oder Phenyl.

Bevorzugt werden auch funktionalisierte Olefine wie Allylisothiocyanat, Allylmethacrylat, 2-Allylphenol, N-Allylthioharnstoff, 2-(Allylthio)-2-thiazolin, Allyltrimethylsillan, Allylacetat, Allylacetoacetat, Allylalkohol, Allylamin, Allylbenzol, Allylcyanid, Allyl-(cyanacetat), Allylanisol, trans-2-Pentenal, cis-2-Pentennitril, 1-Penten-3-ol, 4-Penten-1-ol, 4-Penten-2-ol, trans-2-Hexenal, trans-2-Hexen-1-ol, cis-3-Hexen-1-ol, 5-Hexen-1-ol, Styrol, -Methylstyrol, 4-Methylstyrol, Vinylacetat, 9-Vinylanthracen, 2-Vinylpyridin, 4-Vinylpyridin und 1-Vinyl-2-pyrrolidon eingesetzt.

Bevorzugt erfolgt die Umsetzung bei einem Partialdruck des Olefins von 0,01 - 100 bar, besonders bevorzugt bei einem Partialdruck des Olefins von 0,1 - 10 bar.

Bevorzugt erfolgt die Umsetzung in einem Phosphinsäure-Olefin-Molverhältnis von 1:10.000 bis 1:0,001, besonders bevorzugt im Verhältnis von 1:30 bis 1:0,01.

Bevorzugt erfolgt die Umsetzung in einem Phosphinsäure-Katalysator-Molverhältnis von 1:1 bis 1:0,00000001, besonders bevorzugt bei 1:0,01 bis 1:0,000001.

Bevorzugt erfolgt die Umsetzung in einem Phosphinsäure-Lösungsmittel-Molverhältnis von 1:10.000 bis 1:0, besonders bevorzugt bei 1:50 bis 1:1.

Ein erfindungsgemäßes Verfahren zur Herstellung von Verbindungen der Formel (II) ist dadurch gekennzeichnet, dass man eine Phosphinsäurequelle mit Olefinen in Gegenwart eines Katalysators umsetzt und das Produkt (II) (Alkylphosphonigsäure bzw. -salze, -ester) von Katalysator, Übergangsmetall bzw. Übergangsmetallverbindung, Ligand, Komplexbildner, Salzen und Nebenprodukten befreit wird.

Erfindungsgemäß wird der Katalysator, das Katalysatorsystem, das Übergangsmetall und/oder die Übergangsmetallverbindung abgetrennt durch Zugabe eines Hilfsmittels 1 und Entfernen des Katalysators, des Katalysatorsystems, des Übergangsmetalls und/oder der Übergangsmetallverbindung durch Extraktion und/oder Filtration.

Erfindungsgemäß wird der Ligand und/oder Komplexbildner durch Extraktion mit Hilfsmittel 2 und/oder Destillation mit Hilfsmittel 2 abgetrennt.

Hilfsmittel 1 ist bevorzugt Wasser und/oder mindestens ein Vertreter der Familie der Metallfänger (Metal Scavenger). Bevorzugte Metallfänger sind Metalloxide wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur; Metallcarbonate wie etwa Bariumcarbonat, Calciumcarbonat, Strontiumcarbonat; Metallsulfate wie etwa Bariumsulfat, Calciumsulfat, Strontiumsulfat; Metallphosphate wie etwa Aluminiumphosphat, Vanadiumphosphat Metallcarbide wie etwa Siliconcarbid; Metallaluminate wie etwa Calciumaluminat; Metallsilikate wie etwa Aluminiumsilikat, Kreiden, Zeolithe, Bentonit, Montmorillonit, Hectorit; funktionalisierte Silikate, funktionalisierte Silikagele wie etwa SiliaBond^{®}, QuadraSil™; funktionalisierte Polysiloxane wie etwa Deloxan^{®}; Metallnitride, Kohle, Aktivkohle, Mullite, Bauxite, Antimonite, Scheelite, Perovskite, Hydrotalcite, funktionalisierte und unfunktionalisierte Cellulose, Chitosan, Keratin, Heteropolyanionen, Ionentauscher wie etwa Amberlite™, Amberjet™, Ambersep™, Dowex^{®}, Lewatit^{®}, ScavNet^{®}; funktionalisierte Polymere wie etwa Chelex^{®}, QuadraPure™, Smopex^{®}, PolyOrgs^{®}; polymergebundene Phosphane, Phosphanoxide, Phosphinate, Phosphonate, Phosphate, Amine, Ammoniumsalze, Amide, Thioamide, Harnstoffe, Thioharnstoffe, Triazine, Imidazole, Pyrazole, Pyridine, Pyrimidine, Pyrazine, Thiole, Thiolether, Thiolester, Alkohole, Alkoxide, Ether, Ester, Carbonsäuren, Acetate, Acetale, Peptide, Hetarene, Polyethylenimin/Siliciumdioxid und/oder Dendrimere.

Bevorzugt wird Hilfsmittel 1 in Mengen zugesetzt, die einer 0,1 - 40 gew.-%igen Beladung des Metalls auf dem Hilfsmittel 1 entsprechen.

Bevorzugt wird Hilfsmittel 1 bei Temperaturen von 20 - 90 °C eingesetzt.

Bevorzugt beträgt die Verweilzeit von Hilfsmittel 1 0,5 - 360 Minuten.

Hilfsmittel 2 ist bevorzugt das vorgenannte, erfindungsgemäße Lösungsmittel.

Im Schritt b) ist das Mol-Verhältnis von Verbindungen mit C=X-Doppelbindungen zur Alkylphosphonigsäure (II) 0,5 zu 1 bis 10 zu 1, insbesondere 1 zu 1 bis 5 zu 1.

Bevorzugt erfolgen die Umsetzung im Schritt b) des erfindungsgemäßen Verfahrens bei einem Verhältnis von Lösemittel zu Alkylphosphonigsäure (II) von 100 zu 1 bis 1 zu 10.

Die Veresterung der mono-funktionalisierten Dialkylphosphinsäure (III) bzw. der Alkylphosphonigsäuredrivate (II) sowie der Phosphinsäurequelle (I) zu den entsprechenden Estern kann beispielsweise durch Umsetzung mit höhersiedenden Alkoholen unter Entfernung des gebildeten Wassers durch Azeotropdestillation oder durch Umsetzung mit Epoxiden (Alkylenoxiden) erreicht werden.

Bevorzugt sind M-OH primäre, sekundäre oder tertiäre Alkohole mit einer Kohlenstoffkettenlänge von C₁-C₁₈. Besonders bevorzugt sind Methanol, Ethanol, Propanol, Isopropanol, n-Butanol, 2-Butanol, tert.-Butanol, Amylalkohol und/oder Hexanol.

Bevorzugt sind M'-OH Ethylenglykol, 1,2-Propylenglykol, 1,3-Propylenglykol, 1,4-Butandiol, 2,2-Dimethylpropan-1,3-diol, Neopentylglykol, 1,6-Hexandiol, 1,4-Cyclohexandimethanol, Glycerin, Trishydroxymethylethan, Trishydroxymethylpropan, Pentaerythrit, Sorbit, Mannit, α-Naphthol, Polyethylenglykole, Polypropylenglykole und/oder EO-PO-Blockpolymere.

Geeignet sind als M-OH und M'-OH auch ein- oder mehrwertige, ungesättigte Alkohole mit einer Kohlenstoffkettenlänge von C₁-C₁₈, etwa n-Buten-2-ol-1, 1,4-Butendiol und Allylalkohol.

Geeignet sind als M-OH und M'-OH auch Umsetzungsprodukte von einwertigen Alkoholen mit einem oder mehreren Molekülen von Alkylenoxiden, bevorzugt mit Ethylenoxid und/oder 1,2-Propylenoxid. Bevorzugt sind 2-Methoxyethanol, 2-Ethoxyethanol, 2-n-Butoxyethanol, 2-(2'-Ethyl-hexyloxy)-ethanol, 2-n-Dodecoxyethanol, Methyldiglykol, Ethyldiglykol, Isopropyldiglykol, Fettalkoholpolyglykolether und Arylpolyglykolether.

Bevorzugt sind M-OH und M'-OH auch Umsetzungsprodukte von mehrwertigen Alkoholen mit einem oder mehreren Molekülen Alkylenoxid, insbesondere Diglykol und Triglykol sowie Addukte von 1 bis 6 Molekülen Ethylenoxid oder Propylenoxid an Glycerin, Trishydroxymethylpropan oder Pentaerythrit.

Als M-OH und M'-OH können auch Umsetzungsprodukte von Wasser mit einem oder mehreren Molekülen Alkylenoxid eingesetzt werden. Bevorzugt sind Polyethylenglykole und Poly-1,2-propylenglykole verschiedener Molekulargrößen mit einem mittleren Molgewicht von 100 - 1.000 g/mol, besonders bevorzugt von 150 - 350 g/mol.

Bevorzugt sind als M-OH und M'-OH auch Umsetzungsprodukte von Ethylenoxid mit Poly-1,2-propylenglykolen oder Fettalkoholpropylenglykole; ebenso Umsetzungsprodukte von 1,2-Propylenoxid mit Polyethylenglykolen oder Fettalkoholethoxylaten. Bevorzugt sind solche Umsetzungsprodukte mit einem mittleren Molgewicht von 100 - 1.000 g/mol, besonders bevorzugt von 150 - 450 g/mol.

Einsetzbar sind als M-OH und M'-OH auch Umsetzungsprodukte von Alkylenoxiden mit Ammoniak, primären oder sekundären Aminen, Schwefelwasserstoff, Merkaptanen, Sauerstoffsäuren des Phosphors und C₂-C₆-Dicarbonsäuren. Geeignete Umsetzungs-produkte von Ethylenoxid mit Stickstoffverbindungen sind Triethanolamin, Methyldiethanolamin, n-Butyldiethanolamin, n-Dodecyldiethanolamin, Dimethylethanolamin, n-Butylmethylethanolamin, Di-n-butylethanolamin, n-Dodecylmethylethanolamin, Tetrahydroxyethylethylendiamin oder Pentahydroxyethyldiethylentriamin.

Bevorzugte Alkylenoxide sind Ethylenoxid, 1,2-Propylenoxid, 1,2-Epoxybutan, 1,2-Epoxyethylbenzol, (2,3-Epoxypropyl)benzol, 2,3-Epoxy-1-propanol und 3,4-Epoxy-1-buten.

Geeignete Lösungsmittel sind die in Verfahrensschritt a) genannten Lösungsmittel und auch die eingesetzten Alkohole M-OH, M'-OH und die Alkylenoxide. Diese bieten Vorteile in Form einer höheren Raum-Zeit-Ausbeute.

Bevorzugt wird die Umsetzung unter dem eigenen Dampfdruck des eingesetzten Alkohols M-OH, M'-OH und Alkylenoxids und/oder des Lösungsmittels durchgeführt.

Bevorzugt erfolgt die Umsetzung bei einem Partialdruck des eingesetzten Alkohols M-OH, M'-OH und Alkylenoxids von 0,01 - 100 bar, besonders bevorzugt bei einem Partialdruck des Alkohols von 0,1 - 10 bar.

Bevorzugt wird die Umsetzung bei einer Temperatur von -20 bis 340 °C durchgeführt, besonders bevorzugt bei einer Temperatur von 20 bis 180 °C.

Bevorzugt erfolgt die Umsetzung bei einem Gesamtdruck von 1 bis 100 bar.

Bevorzugt erfolgt die Umsetzung in einem Molverhältnis der Alkohol- bzw. Alkylenoxidkomponente zu der Phosphinsäurequelle (I) bzw. Alkylphosphonigsäure (II) bzw. mono-funktionalisierte Dialkylphosphinsäure (III) von 10.000:1 bis 0,001:1, besonders bevorzugt im Verhältnis von 1.000:1 bis 0,01:1.

Bevorzugt erfolgt die Umsetzung in einem Molverhältnis der Phosphinsäurequelle (I) bzw. Alkylphosphonigsäure (II) bzw. mono-funktionalisierte Dialkylphosphinsäure (III) zum Lösungsmittel von 1:10.000 bis 1:0, besonders bevorzugt in einem Phosphinsäure-Lösungsmittel-Molverhältnis von 1:50 bis 1:1.

Die Aminofunktionalität der mono-funktionalisierten Dialkylphosphinsäuren, deren Salze und Ester der Formel (III) kann im Folgenden mit Mineralsäuren, Carbonsäuren, Lewissäuren, organischen Säuren oder Mischungen dieser Säuren zu weiteren Ammoniumsalzen umgesetzt werden.

Bevorzugt erfolgt die Umsetzung bei einer Temperatur von 0 bis 150 °C, besonders bevorzugt bei einer Temperatur von 20 bis 70 °C.

Geeignete Lösungsmittel sind die, wie sie weiter vorne in Verfahrensstufe a) der Verfahren 1 bis 4 eingesetzt werden.

Bevorzugte Mineralsäuren sind beispielsweise Salzsäure, Schwefelsäure, Salpetersäure oder Phosphorsäure, Phosphonsäure, Phosphinsäure.

Bevorzugte Carbonsäuren sind beispielsweise Ameisensäure, Essigsäure, Propionsäure, Buttersäure, Milchsäure, Palmsäure, Stearinsäure, Malonsäure, Maleinsäure, Fumarsäure, Weinsäure, Zitronensäure, Ascorbinsäure.

Bevorzugte Lewissäuren sind Borane, wie beispielsweise Diboran, Trialkylboran, wie beispielsweiseTrimethylboran, Triethylboran, Tributylboran, Triarylboran, wie beispielsweise Triphenylboran.

Besonders bevorzugt handelt es sich bei den Ammoniumsalzen um Salze oben genannter mono-aminofunktionalisierten Dialkylphosphinsäuren, deren Salze und Ester mit Salzsäure, Phosphorsäure, Phosphonsäure, Phosphinsäure, Essigsäure, Zitronensäure, Ascorbinsäure, Triphenylboran.

Die mono-funktionalisierten Dialkylphosphinsäure oder deren Salz (III) kann im Folgenden in Schritt c) zu weiteren Metallsalzen umgesetzt werden.

Bevorzugt handelt es sich bei den eingesetzten Metallverbindungen der Verfahrensstufe c) um Verbindungen der Metalle Mg, Ca, Al, Sb, Sn, Ge, Ti, Fe, Zr, Zn, Ce, Bi, Sr, Mn, Li, Na, K, besonders bevorzugt Ca, Al, Ti, Zn, Sn, Ce, Fe.

Geeignete Lösungsmittel für Verfahrensstufe c) sind die, wie sie weiter vorne in Verfahrensstufe a) eingesetzt werden.

Bevorzugt erfolgt die Umsetzung der in Verfahrensstufe c) in wässrigem Medium.

Bevorzugt setzt man in Verfahrensstufe c) die nach Verfahrensstufe b) erhaltenen erhaltene mono-funktionalisierten Dialkylphosphinsäuren, deren Ester und/oder Alkalisalze (III) mit Metallverbindungen von Mg, Ca, Al, Zn, Ti, Sn, Zr, Ce oder Fe zu den mono-funktionalisierten Dialkylphosphinsäuresalzen (III) dieser Metalle um.

Die Umsetzung erfolgt dabei in einem Molverhältnis von mono-funktionalisierter Dialkylphosphinsäure/-ester/-salz (III) zu Metall von 8 zu 1 bis 1 zu 3 (für vierwertige Metallionen oder Metalle mit stabiler vierwertiger Oxiationsstufe), von 6 zu 1 bis 1 zu 3 (für dreiwertige Metallionen oder Metalle mit stabiler dreiwertiger Oxidationsstufe), von 4 zu 1 bis 1 zu 3 (für zweiwertige Metallionen oder Metalle mit stabiler zweiwertiger Oxidationsstufe) und von 3 zu 1 bis 1 zu 4 (für einwertige Metallionen oder Metalle mit stabiler einwertiger Oxidationsstufe).

Bevorzugt führt man in Verfahrenstufe b) der Verfahren 1 bis 4 erhaltenes mono-funktionalisiertes Dialkylphosphinsäureester/-salz (III) in die entsprechende Dialkylphosphinsäure über und setzt in Verfahrensstufe c) diese mit Metallverbindungen von Mg, Ca, Al, Zn, Ti, Sn, Zr, Ce oder Fe zu den mono-funktionalisierten Dialkylphosphinsäuresalzen (III) dieser Metalle um.

Bevorzugt wandelt man in Verfahrenstufe b) der Verfahren 1 bis 4 erhaltene mono-funktionalisierte Dialkylphosphinsäure/-ester (III) in ein Dialkylphosphinsäure-Alkalisalz um und setzt in Verfahrensstufe c) dieses mit Metallverbindungen von Mg, Ca, Al, Zn, Ti, Sn, Zr, Ce oder Fe zu den mono-funktionalisierten Dialkylphosphinsäuresalzen (III) dieser Metalle um.

Bevorzugt handelt es sich bei den Metallverbindungen von Mg, Ca, Al, Zn, Ti, Sn, Zr, Ce oder Fe für Verfahrenstufe c) um Metalle, Metalloxide, -hydroxide, -oxidhydroxide, -borate, -carbonate, -hydroxocarbonate, -hydroxocarbonathydrate, gemischte -hydroxocarbonate, gemischte -hydroxocarbonathydrate, -phosphate, -sulfate, -sulfat- hydrate, -hydroxosulfat-hydrate, gemischte -hydroxosulfathydrate, -oxysulfate, -acetate, -nitrate, -fluoride, -fluorid-hydrate, -chloride, -chloridhydrate, -oxychloride, -bromide, -iodide, -iodidhydrate, -carbon-säurederivate und/oder -alkoxide.

Bevorzugt handelt es sich bei den Metallverbindungen um Aluminiumchlorid, Aluminiumhydroxid, Aluminiumnitrat, Aluminiumsulfat, Titanylsulfat, Zinknitrat, Zinkoxid, Zinkhydroxid und/oder Zinksulfat.

Geeignet sind auch metallisches Aluminium, -fluorid, -hydroxychlorid, -bromid, -iodid, -sulfid, -selenid; -phosphid, -hypophosphit, -antimonid, -nitrid; -carbid, -hexafluorosilicat; -hydrid, -calciumhydrid, -borhydrid; -chlorat; Natrium-Aluminiumsulfat, Aluminium-Kaliumsulfat, Aluminiumammoniumsulfat, -nitrat, -metaphosphat, -phosphat, -silicat, -magnesiumsilicat, -carbonat, -hydrotalcit, -natriumcarbonat, -borat; -thiocyanat; -oxid, -oxidhydroxid, ihre entsprechenden Hydrate und/oder Polyaluminiumhydroxyverbindungen, die vorzugsweise einen Aluminiumgehalt von 9 bis 40 Gew.-% besitzen.

Geeignet sind auch Aluminiumsalze von Mono-, Di-, Oligo-, Polycarbonsäuren wie z. B. Aluminiumdiacetat, -acetotartrat, -formiat, -lactat, -oxalat, -tartrat, -oleat, -palmitat, -sterarat, -trifluoromethansulfonat, -benzoat,-salicylat, -8-oxychinolat.

Geeignet sind ebenfalls elementares, metallisches Zink sowie Zinksalze wie z. B. Zinkhalogenide (Zinkfluorid, Zinkchloride, Zinkbromid, Zinkiodid).

Geeignet ist auch Zinkborat, -carbonat, -hydroxidcarbonat, -silicat, -hexafluorosilicat, -stannat, -hydroxidstannat, -Magnesium-Aluminium-Hydroxidcarbonat; -nitrat, -nitrit, -phosphat, -pyrophosphat; -sulfat, -phosphid, -selenid, -tellurid und Zinksalze der Oxosäuren der siebten Hauptgruppe (Hypohalogenite, Halogenite, Halogenate, z. B. Zinkiodat, Perhalogenate, z. B. Zinkperchlorat); Zinksalze der Pseudohalogenide (Zinkthiocyanat, -cyanat, -cyanid); Zinkoxide, -peroxide, -hydroxide oder gemischte Zinkoxidhydroxide. Bevorzugt sind Zinksalze der Oxosäuren der Übergangsmetalle (bspw. Zinkchromat(VI)hydroxyd, -chromit, -molybdat, -permanganat, -molybdat).

Geeignet sind auch Zinksalze von Mono-, Di-, Oligo-, Polycarbonsäuren, wie z. B. Zinkformiat, -acetat, -trifluoracetat, -propionat, -butyrat, -valerat, -caprylat, -oleat, -stearat, -oxalat, -tartrat, -citrat, -benzoat, -salicylat, -lactat, -acrylat, -maleat, -succinat, Salze von Aminosäuren (Glyzin), von sauren Hydroxyfunktionen (Zinkphenolat etc.), Zink-p-phenolsulfonat, -acetylacetonat, -stannat, -dimethyldithiocarbamat, -trifluormethansulfonat.

Geeignete Metallverbindungen sind Salze eines Elementes der ersten Hauptgruppe, bevorzugt ein Alkalimetallhydroxid, Alkalimetalloxidhydroxid, Alkalimetallhydroxidcarbonat, Alkalimetallalkoholat, besonders bevorzugt Lithiumhydroxid, Natriumhydroxid, Kaliumhydroxid, Natriummethylat, Natriumethylat, Natrium-n-propylat, Natrium-i-propylat, Natrium-n-butylat, Natriumi-butylat, Natrium-tert-butylat, Natriumamylat und/oder Natriumglycolat.

Geeignete Metallverbindungen sind Salze eines Elementes der zweiten Haupt- und Nebengruppe, bevorzugt Erdalkalimetallhydroxid, Erdalkalimetalloxidhydroxid, Erdalkalimetallmetallhydroxidcarbonat, besonders bevorzugt Magnesiumhydroxid (Magnifin^{®} H5, Albermarle), Hydrotalcite (Mg₆Al₂(OH)₁₆CO₃ * nH₂O), Dihydrotalcit, Magnesium-Carbonate oder Magnesium-Calcium-Carbonate, Calciumhydroxid.

Bei den Titan-Verbindungen ist metallisches Titan ebenso wie Titan(III) und/oder (IV) -chlorid, -nitrat, -sulfat, -formiat, -acetat, -bromid, -fluorid, -oxychlorid, -oxysulfat, -oxid, -n-propoxid, -n-butoxid, -isopropoxid, -ethoxid, -2-ethylhexyloxid.

Geeignet ist auch metallisches Zinn sowie Zinnsalze (Zinn(II) und /oder (IV) -chlorid); Zinnoxide und Zinn-Alkoxid wie z. B. Zinn-(IV)-tert-butoxid.

Geeignet sind auch Cer(III)fluorid, -chlorid, -nitrat.

Bei den Zirkonium-Verbindungen ist metallisches Zirkonium sowie Zirkoniumsalze wie Zirkoniumchlorid, -sulfat, Zirconylacetat, Zirconylchlorid bevorzugt. Weiterhin bevorzugt sind Zirkonoxide sowie Zirkon-(IV)-tert-butoxid.

Die Umsetzung in Verfahrensstufe c) erfolgt bei einem Feststoffgehalt der mono-funktionalisierten Dialkylphosphinsäuresalze von 0,1 bis 70 Gew.-%, bevorzugt 5 bis 40 Gew.-%.

Bevorzugt erfolgt die Umsetzung in Verfahrensstufe c) bei einer Temperatur von 20 bis 250 °C, bevorzugt bei einer Temperatur von 80 bis 120 °C.

Bevorzugt erfolgt die Umsetzung in Verfahrensstufe c) bei einem Druck zwischen 0,01 und 1.000 bar, bevorzugt 0,1 bis 100 bar.

Bevorzugt erfolgt die Umsetzung in Verfahrensstufe c) während einer Reaktionszeit von 1*10⁻⁷ bis 1.000 h.

Bevorzugt wird das nach der Verfahrensstufe c) durch Filtrieren und/oder Zentrifugieren aus dem Reaktionsgemisch abgetrenntes mono-funktionalisiertes Dialkylphosphinsäuresalz (III) getrocknet.

Bevorzugt wird das nach Verfahrensstufe b) erhaltene Produktgemisch ohne weitere Reinigung mit den Metallverbindungen umgesetzt.

Bevorzugte Lösungsmittel sind die in Verfahrensschritt a) genannten Lösungsmittel.

Bevorzugt ist die Umsetzung in Verfahrensstufe b) und/oder c) im durch Stufe a) gegebenen Lösungsmittelsystem.

Bevorzugt ist die Umsetzung in Verfahrensstufe c) in einem modifizierten gegebenen Lösungsmittelsystem. Hierfür werden acide Komponenten, Lösevermittler, Schauminhibitoren etc. zugegeben.

In einer weiteren Ausführungsform des Verfahrens wird das nach Verfahrensstufe a) und/oder b) erhaltene Produktgemisch aufgearbeitet.

In einer weiteren Ausführungsform des Verfahrens wird das nach Verfahrensstufe b) erhaltene Produktgemisch aufgearbeitet und danach die nach Verfahrensstufe b) erhaltenen mono-funktionalisierten Dialkylphosphinsäuren und/oder deren Salze oder Ester (III) in Verfahrensstufe c) mit den Metallverbindungen umgesetzt.

Bevorzugt wird das Produktgemisch nach Verfahrensstufe b) aufgearbeitet, indem die mono-funktionalisierten Dialkylphosphinsäuren und/oder deren Salze oder Ester (III) durch Entfernen des Lösungsmittelsystems isoliert werden, z. B. durch Eindampfen.

Bevorzugt weist das mono-funktionalisierte Dialkylphosphinsäuresalz (III) der Metalle Mg, Ca, Al, Zn, Ti, Sn, Zr, Ce oder Fe wahlweise
eine Restfeuchte von 0,01 bis 10 Gew.-%, bevorzugt von 0,1 bis 1 Gew.-%,
eine mittlere Teilchengröße von 0,1 bis 2000 µm, bevorzugt von 10 bis 500 µm, eine Schüttdichte von 80 bis 800 g/l, bevorzugt von 200 bis 700 g/l,
eine Rieselfähigkeit nach Pfrengle von 0,5 bis 10, bevorzugt von 1 bis 5, auf.

Besonders bevorzugt enthalten die Formkörper, -Filme, -Fäden und -Fasern 5 bis 30 Gew.-% der mono-funktionalisierte Dialkylphosphinsäure/-ester/-salze, hergestellt nach einem oder mehreren der Ansprüche 1 bis 15, 5 bis 80 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Bevorzugt handelt es sich bei den Additiven um Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel. Bevorzugt ist ein Flammschutzmittel, enthaltend 0,1 bis 90 Gew.-% der halogenarmen mono-funktionalisierten Dialkylphosphinsäureester und 0,1 bis 50 Gew.-% weitere Additive, besonders bevorzugt Diole.

Bevorzugte Additive sind auch Aluminiumtrihydrat, Antimonoxid, bromierte aromatische oder cycloaliphatische Kohlenwasserstoffe, Phenole, Ether, Chlorparaffin, Hexachloro-cyclopentadien-Addukte, Roter Phosphor, Melaminderivate, Melamincyanurate, Ammoniumpoiyphosphate und Magnesiumhydroxid. Bevorzugte Additive sind auch weitere Flammschutzmittel, insbesondere Salze von Dialkylphosphinsäuren.

Insbesondere betrifft die Erfindung die Verwendung der erfindungsgemäßen mono-funktionalisierten Dialkylphosphinsäure, -ester und -salze (III) als Flammschutzmittel bzw. als Zwischenstufe zur Herstellung von Flammschutzmitteln für thermoplastische Polymere wie Polyester, Polystyrol oder Polyamid und für duroplastische Polymere wie ungesättigte Polyesterharze, Epoxidharze, Polyurethane oder Acrylate.

Geeignete Polyester leiten sich von Dicarbonsäuren und deren Ester und Diolen und/oder von Hydroxycarbonsäuren oder den entsprechenden Lactonen ab. Bevorzugt wird Terephthalsäure und Ethylenglykol, Propan-1,3-diol und Butan-1,3-diol eingesetzt.

Geeignete Polyester sind u.a. Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexan-terephthalat, Polyhydroxybenzoate, sowie Block-Polyetherester, die sich von Polyethern mit Hydroxylendgruppen ableiten; ferner mit Polycarbonaten oder MBS modifizierte Polyester.

Synthetische lineare Polyester mit permanentem Flammschutz setzen sich aus Dicarbonsäure-Komponenten, C₂-C₆-Diol-Komponenten der erfindungsgemäßen mono-funktionalisierten Dialkylphosphinsäuren und -ester und aus der nach dem erfindungsgemäßen Verfahren hergestellten mono-funktionalisierten Dialkylphosphin-säuren und -ester als Phosphor-enthaltende Kettenglieder zusammen. Die erfindungs-gemäßen mono-funktionalisierten Dialkylphosphinsäuren und -ester sind Teil der Polymerkette. Die Phosphor enthaltenden Kettenglieder machen 2 - 20 Gew.-% der Dicarbonsäure-Komponente des Polyesters aus. Bevorzugt beträgt der resultierende Phosphorgehalt im Polyester 0,1 - 5, besonders bevorzugt 0,5 - 3 Gew.-%.

Bevorzugt ist die monomere mono-funktionalisierten Dialkylphosphinsäure, -ester zu Dicarbonsäure-Komponenten, C₂-C₆-Diol-Komponenten zuzugeben und dann zu verestern/umzuestern und zu polykondensieren

Bevorzugt wird zur Herstellung der flammgeschützten Formmasse ausgehend von den freien Dicarbonsäure und Diolen zunächst direkt verestert und dann zu einem nicht flammgeschützten Präkondensat polykondensiert.

Bevorzugt wird ausgehend von Dicarbonsäureestern, insbesondere Dimethylestern, zunächst umgeestert und dann unter Verwendung der hierfür üblichen Katalysatoren zu einem nicht flammgeschützten Präkondensat polykondensiert.

Bevorzugt wird dann das monomere mono-funktionalisierten Dialkylphosphinsäure, -ester (III) hinzugesetzt und die Polymerisation vervollständigt. Die monomere mono-funktionalisierten Dialkylphosphinsäure, -ester ist dann bevorzugt statistisch zwischen den Dicarbonsäure-Diglycoleinheiten in die Polymerkette eingebaut.

Bevorzugt können bei der Polyesterherstellung neben den gängigen Katalysatoren auch übliche Additive (Vernetzungsmittel, Mattierungs- und Stabilisierungsmittel, Nukleierungsmittel, Farb- und Füllstoffe etc.) zugesetzt werden.

Bevorzugt ist das zur Veresterung und/oder Umesterung eingesetzte Verhölntis von Dicarbonsäureestern zu Diol-Komponenten 1:1 bis 1:3 mol/mol.

Bevorzugte Dicarbonsäuren sind aromatische Säuren wie Terephthalsäure, Isophthalsäure, 5-Sulphoisophthalsäure, Diphenyl-para-dicarbonsäure und Paraphenylenediessigsäure

Bevorzugt sind weiterhin Naphthalindicarbonsäuren wie 1,3-Naphthalindicarbonsäure, 1,4-Naphthalindicarbonsäure, 1,5-Naphthalindicarbonsäure, 2,6- Naphthalindicarbonsäure, 2,7-Naphthalindicarbonsäure; gesättigte aliphatische Dicarbonsäuren wie Oxalsäuren, Malonsäure, Bernsteinsäure, Glutarsäure, Adipinsäure, Pimelinsäure, Suberinsäure, Azelainäsure, Sebacinsäure, Decanedicarbonsäure, Dodecandicarbonsäure, Tetradecandicarbonsäure, Hexadecandicarbonsäure, 1,3-Cyclobutandicarbonsäure, 1,3-Cyclopentanedicarbonsäure, 1,2-Cyclohexanedicarbonsäure, 1,3-Cyclohexanedicarbonsäure, 1,4-Cyclohexandicarbonsäure und 2,5-Norbornandicarbonsäure; ungesättigte aliphatische Dicarbonsäure wie Fumarsäure, Maleinsäure, Itaconsäure.

Bevorzugte Alkylenglycole sind Ethylenglycol, 1,3-Propandiol, 1,4-Butandiol und höhere Homologe, Diethylenglycol, Triethylenglycol, Neopentylglycol, 1,2-Cyclohexandiol, 1,3-Cyclohexandiol, 1,4-Cyclohexandiol, 1,2-Cyclohexandimethanol, 1,3-Cyclohexan-dimethanol, 1,4-Cyclohexandimethanol, 1,4-Cyclohexandiethanol, 1,10-Decamethylenglycol, 1,12-Dodecandiol, Polyethylenglycol, Polytrimethylenglycol und Polytetramethylenglycol; aromatische Glycole wie Hydrochinon, 4,4'-Dihydroxybisphenol, 1,4-Bis(hydroxy-ethoxy)benzole, 1,4-Bis(hydroxyethoxyphenyl)sulfon, Bis(p-hydroxyphenyl)ether, Bis(p-hydroxyphenyl)sulfon, Bis(p-hydroxyphenyl)methan, 1,2-Bis(p-hydroxyphenyl)ethan, Bisphenol A, Bisphenol C, 2,5-Naphthalendiol.

Weiterhin sind bevorzugt Polyester auf Basis von Hydroxycarbonsäuren wie Milchsäure, Citronensäure, Weinsäure, Hydroxyessigsäure, 3-Hydroxybuttersäure, p-Hydroxybenzoesäure, p-(2-Hydroxyethoxy)benzoesäure und 4-Hydroxycyclohexancarbosäure.

Bevorzugt findet die Veresterung und/oder Umesterung bei der Polyesterherstellung bei Temperaturen von 100 - 300 °C statt, besonders bevorzugt bei 180 - 240 °C.

Bevorzugt findet die Polykondensation bei der Polyesterherstellung bei Drücken zwischen 0,1 bis 200 mbar und Temperaturen von 150 - 450 °C statt, besonders bevorzugt bei 200 - 300 °C.

Bevorzugt ist weiterhin die mono-funktionalisierten Dialkylphosphinsäuren, -ester (III) zunächst zu einem Oligomeren mit der Formel X-O-(P(=O)R-CH₂-O)ₙ-H mit R= C₁-C₈-Alkyl, C₆-C₂₀-Alkaryl, C₆-C₂₀-Aralkyl, C₆-C₂₀-Aryl und X=Alkyl, Hydroxyalkyl, Alkaryl, H sowie n=2,0 bis 100 zu kondensieren.

Eine weitere Ausführungsform ist eine Zusammensetzung enthaltend Monomer 10 - 75 mol-%, Dimer 10 - 75 mol-% und Trimer 0 bis 35 mol-%.

Bevorzugt ist das Oligomer zu Dicarbonsäure-Komponenten, C₂-C₆-Diol-Komponenten zuzugeben und dann zu verestern/umzuestern und zu polykondensieren. Bevorzugt sind dann P-Konzentrationen von 0,1 bis 5 Gew.-%.

Bevorzugt ist dann dieses Oligomer mit Präkondensat zu vermischen und die Polykondensation zu vervollständigen. Bevorzugt sind dann P-Konzentrationen von 0,1 bis 5 Gew.-%.

Bevorzugt ist weiterhin, monomere mono-funktionalisierten Dialkylphosphinsäure, -ester (III) oder Oligomer zu auskondensiertem Polyester unter Kondensationsbedingungen (0,01 bis 1.000 mbar, 140 - 350 °C, 0,5 - 3 h) zu mischen. Bevorzugt sind dann P-Konzen-trationen von 0,1 bis 5 Gew.-%.

Bevorzugt ist weiterhin monomere oder oligomere mono-funktionalisierten Dialkylphosphinsäure, -ester (III) mit Präpolymer zu einem Masterbatch / Konzentrat zu kondensieren. Bevorzugt sind dann P-Konzentrationen von 0,1 bis 25 Gew.-%, besonders bevorzugt 1 bis 10 Gew.-%.

Bevorzugt wird das Masterbatch unter Extrudierbedingungen mit nicht flammgeschütztem Polymer gemischt. Bevorzugte Polymere sind Polyethylenterephthalat, Polytrimethylen-terephthalat und Polybutylenterephthalat, Polyamide.

Vorteilhaft bei der Verwendung der Masterbatche ist, dass sich bei der Zugabe erhöhter Mengen mono-funktionalisierten Dialkylphosphinsäure, -ester, Salze (III) keine Schwankungen in der Schmelzviskosität der flammgeschützten Polymerformmasse ergeben, wie dies bei Zugabe von anderen Flammschutzmitteln zu Präkondensat auftreten kann. Infolge von Schwankungen in der Schmelzviskosität läßt sich die Schmelzviskosität schwer steuern.

Die erfindungsgemäß hergestellten flammgeschützten Polyester-Formmassen werden bevorzugt in flammgeschützten Polyester-Formkörpern eingesetzt.

Bevorzugte flammgeschützte Polyester-Formkörper sind Fäden, Fasern, Folien und Formkörper, die als Dicarbonsäure-Komponente hauptsächlich Terephthalsäure und als Diolkomponente hauptsächlich Ethylenglykol enthalten.

Bevorzugt beträgt der resultierende Phosphorgehalt in aus flammgeschützten Polyester hergestellten Fäden und Fasern 0,1 - 18, bevorzugt 0,5 - 15 und bei Folien 0,2 - 15, bevorzugt 0,9 - 12 Gew.-%.

Bervorzugt ist eine flammgeschützte Polymerformmasse in der das Polykondensationsprodukt mindestens eine Alkyldicarbonsäure, mindestens ein Diamin und eine mono-funktionalisierten Dialkylphosphinsäure enthält. Das so flammgeschützte Polyamid einthält 0,1 bis 1% Phosphor. Die mono-funktionalisierte Dialkylphosphinsäure, -ester (III) wird bevorzugt den Monomeren Salzen unter Kondensaitonsbedingungen zugegeben und in das Polymer einkondnesiert. Sie ist dann statistisch in die Monomerenabfolge Alkyldicarbonsäure-Diamin eingebaut.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeeigneten Polystyrolen auch um Pfropfcopolymere von Styrol oder von alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkyl-methacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als ABS-, MBS-, ASA- oder AES-Polymere bekannt sind.

Bevorzugt handelt es sich bei den Polymeren auch um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10 , Polyamid 11, Polyamid 12, usw. Solche Polyamide sind z. B. unter den Handelsnamen Nylon^{®}, Fa. DuPont, Ultramid^{®}, Fa. BASF, Akulon^{®} K122, Fa. DSM, Zytel^{®} 7301, Fa. DuPont, Durethan^{®} B 29, Fa. Bayer und Grillamid^{®}, Fa. Ems Chemie u.a. bekannt.

Geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylenterephthalamid oder Poly-m-phenylenisophthalamid, Biockcopoiymere der vorstehend genannten Polyamide mit Polyolefinen, Olefin-Copolymeren, Ionomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die mono-funktionalisierte Dialkylphosphinsäure/-ester/-salze, hergestellt nach einem oder mehreren der Ansprüche 1 bis 15 werden bevorzugt in Formmassen angewendet, die weiter zur Erzeugung von Polymer-Formkörpern eingesetzt werden.

Besonders bevorzugt enthält die flammgeschützte Formmasse 5 bis 30 Gew.-% mono-funktionalisierte Dialkylphosphinsäuren, -salze oder -ester, die nach einem oder mehreren der Ansprüche 1 bis 15 hergestellt wurden, 5 bis 80 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Die Erfindung betrifft auch Flammschutzmittel, die die mono-funktionalisierte Dialkylphosphinsäuren, -salze oder -ester, die nach einem oder mehreren der Ansprüche 1 bis 15 hergestellt wurden enthalten.

Außerdem betrifft die Erfindung Polymer-Formmassen sowie Polymer-Formkörper, -Filme, -Fäden und -Fasern, enthaltend die erfindungsgemäß hergestellten mono-funktionalisierten Dialkylphosphinsäuresalze der Metalle Mg, Ca, Al, Zn, Ti, Sn, Zr, Ce oder Fe.

Insbesondere betrifft die Erfindung die Verwendung der erfindungsgemäß hergestellten mono-funktionalisierten Dialkylphosphinsäuresalze als Flammschutzmittel für thermoplastische Polymere oder als Zwischenstufe zur Herstellung von Flammschutzmitteln für Polyester, Polystyrol oder Polyamid und für duroplastische Polymere wie ungesättigte Polyesterharze, Epoxidharze, Polyurethane oder Acrylate.

Die Erfindung wird durch die nachstehenden Beispiele erläutert.

Herstellung, Verarbeitung und Prüfung von flammgeschützten Polymerformmassen und flammgeschützten Polymerformkörpern

Die Flammschutzkomponenten werden mit dem Polymergranulat und evtl. Additiven vermischt und auf einem Doppelschnecken-Extruder (Typ Leistritz LSM^{®} 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0: kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende
V-1: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0
V-2: Zündung der Watte durch brennendes Abtropfen, übrige Kriterien wie bei V-1 Nicht klassifizierbar (nkl): erfüllt nicht die Brandklasse V-2.

Bei einigen untersuchten Proben wurde außerdem der LOI-Wert gemessen. Der LOI-Wert (Limiting Oxygen Index) wird nach ISO 4589 bestimmt. Nach ISO 4589 entspricht der LOI der geringsten Sauerstoffkonzentration in Volumenprozent, die in einer Mischung von Sauerstoff und Stickstoff gerade noch die Verbrennung des Kunststoffs unterhält. Je höher der LOI-Wert, desto schwerer entflammbar ist das geprüfte Material.

| | | |
|---|---|---|
| LOI | 23 | brennbar |
| LOI | 24-28 | bedingt brennbar |
| LOI | 29-35 | flammwidrig |
| LOI | >36 | besonders flammwidrig |

### Beispiel 1

Bei Raumtemperatur werden in einem Dreihalskolben mit Rührer und Intensivkühler 295 g Wasser vorgelegt und unter Rühren und 10-minütigem Durchleiten von Stickstoff "entgast". Dann werden 0,3 mg Palladium(II)sulfat und 3,6 mg Tris(3-sulfophenyl)-phosphin Trinatriumsalz hinzugegeben und 15 Minuten nachgerührt. Unter Rühren erfolgt die Zugabe von 103,4 g Phosphinsäure in 103,4 g Wasser. Die Reaktionslösung wird in einen 2 I-Büchi-Reaktor überführt und unter Rühren mit 2,5 bar Ethylen beschickt und das Reaktionsgemisch auf 80 °C geheizt. Nach einer Ethylenaufnahme von 44 g wird auf Raumtemperatur abgekühlt und freies Ethylen unter Verbrennung abgelassen. Das Reaktionsgemisch wird am Rotationsverdampfer bei maximal 60 °C vom Lösungsmittel befreit. Der Rückstand wird mit 160 g VE-Wasser versetzt und 1 Stunde bei Raumtemperatur unter Stickstoffatmosphäre gerührt. Der entstandene Rückstand wird filtriert und das Filtrat mit 100 ml Toluol extrahiert.

Die wässrige Phase wird am Rotationsverdampfer vom Lösungsmittel befreit. Es werden 147,2 g Ethylphosphonigsäure (96,3 %) erhalten. Diese wird mit 147 g demin. Wasser und 47,6 g Paraformaldehyd (95 %) in einem Laborautoklav der Fa. Berghoff eingesetzt. Nach sechsstündigem Rühren bei 150 °C wird das Rohprodukt am Rotavapor eingedampft und 189,5 g Ethyl-Hydroxymethylphosphinsäure (91,8 % 31 P-NMR) erhalten. Dies entspricht einer Ausbeute von 93 %.

### Beispiel 2

14,6 g Ethylphosphonige Säure (hergestellt nach Beispiel 1) werden mit 21,2 g Wasser, 207,3 g Ethanol und 35,0 g Benzaldehyd versetzt und in einem Mehrhalsrundkolben mit aufgesetztem KPG-Rührer, Thermometer und Rückflusskühler für 6 h auf 110 °C erhitzt. In der Reaktionslösung werden per 31 P-NMR-Spektroskopie 65 mol-% Ethyl-Hydroxymethyl-phenyl-Phosphinsäure bestimmt.

### Beispiel 3

48,8 g Ethylphosphonige Säure (hergestellt nach Beispiel 1) werden mit 43 g Wasser und 26,4 g Paraldehyd versetzt und in einem Laborautoklav der Fa. Berghoff für 12 h auf 150 °C erhitzt. In der Reaktionslösung werden per 31 P-NMR-Spektroskopie 77 mol-% Ethyl-Hydroxyethylphenyl-Phosphinsäure bestimmt.

### Beispiel 4

Wie in Beispiel 1 werden in einem Laborautoklav der Fa. Berghoff 100,1 g Ethylphos-phonigsäure (96,3 %) (hergestellt nach Beispiel 1), 100,1 g demin. Wasser und 34,0 g Paraformaldehyd (95 %) eingesetzt. Nach sechsstündigem Rühren bei 170 °C wird das Rohprodukt am Rotavapor eingedampft und danach in einem Dreihalsrundkolben mit aufgesetztem KPG-Rührer, Rückflusskühler und Gaseinleitungsrohr mit 88,7 g Ethylenoxid umgesetzt. Es werden 229,5 g Glycolester mit einem P-Gehalt von 14,9 % und einem 31P-NMR-Signal bei ca. 59 ppm erhalten. Der Gehalt an freiem Glycol beträgt 4 %.

### Beispiel 5

In einem Dreihalsrundkolben mit aufgesetztem KPG-Rührer, Rückflusskühler und Tropftrichter werden 44,0 g Paraformaldehyd (95 %), 105,5 g demin. Wasser und 233,4 g Diethylaminhydrochlorid vorgelegt und 100,1 g Ethylphosphonigsäure (96,3 %) (hergestellt nach Beispiel 1) während 6 h bei 110 °C unter Rühren zugegeben. Mit 8 g 37 %iger Salzsäure wird der pH-Wert der Reaktionslösung auf unter 1 eingestellt. Eine Stunde wird am Rückfluß gekocht und danach eine Lösung von Ethyl-Diethylaminomethylphosphin-säure erhalten.

### Beispiel 6

In einem 4 I-Dreihalskolben mit KPG-Rührer, Rückflusskühler und Tropftrichter werden 1094 g demin. Wasser, 502,1 g Ethyl-Diethylaminomethylphosphinsäure (hergestellt nach Beispiel 5) vorgelegt und auf 90 °C erhitzt. Innerhalb von 2 h werden unter Rühren 224 g einer wässrigen Aluminiumsulfatlösung (4,3 % Al) zugetropft. Der ausgefallene Feststoff wird abfiltriert und mit 1.000 g demin. Wasser gewaschen, danach bei 130 °C getrocket. Es werden 182 g Aluminiumtris(bisdiethylaminomethylphosphinat) erhalten entsprechend einer Ausbeute von 91 %.

### Beispiel 7

In einem Einliter-Dreihalskolben mit aufgesetztem Rückflusskühler, KPG-Kühler und Tropftrichter werden unter Stickstoff 48,8 g Ethylphosphonigsäure (96,3 %) (hergestellt nach Beispiel 1) und 22,0 g Paraldehyd (Acetaldehyd-Trimer) in 125 g Wasser zugegeben und zum Rückfluss erhitzt. Dann wird eine Lösung von 109,9 g Diphenylmethylaminhydro-chlorid in 250 g demin. Wasser zugetropft. Es wird 2 h nachgerührt, abgekühlt, der Feststoff abfiltriert, mit Aceton gewaschen und getrocknet. Ausbeute: 132 g Diphenyl-methylaminphosphinsäure (87 %).

### Beispiel 8

132 g Diphenylmethylaminophosphinsäure (hergestellt nach Beispiel 7) werden mit 715 g 20 %iger Schwefelsäure versetzt und 2 h am Rückfluss gekocht. Dann wird zur Trockene eingedampft, zweimal mit 100 g Di-isopropylether gewaschen und noch einmal eingedampft. Es wird mit Ethanol aufgenommen und mit Propylenoxid versetzt. Der ausfallende Feststoff wird abfiltriert, mit Ethanol gewaschen und getrocknet. In 87 %iger Ausbeute werden 56 g (1-Amino-1-methyl)-methyl-ethylphosphinsäure erhalten.

### Beispiel 9

In einem Einliter-Dreihalskolben mit aufgesetztem Rückflusskühler, KPG-Kühler und Tropftrichter wird unter Stickstoff eine Lösung von 49,3 g Ethylphosphonigsäum (96,3 %) (hergestellt nach Beispiel 1) in 125 g Wasser zu einer am Rückfluss kochenden Lösung von 91,6 g Diphenylmethylamin, 22,0 g Paraldehyd (Acetaldehyd-Trimer) und 25 g 98 %ige Schwefelsäure in 250 g demin. Wasser zugetropft. Es wird 2 h nachgerührt, abgekühlt, der Feststoff abfiltriert, mit Aceton gewaschen und getrocknet. Entsprechend einer Ausbeute von 82 % werden 125 g Diphenylmethylaminiphosphinsäure erhalten.

### Beispiel 10

405,5 g Ethyl-hydroxymethylphosphinsäure (hergestellt nach Beispiel 1) werden mit 1115 g Butanol versetzt und durch Kochen bei Normaldruck mit einem Wasserabscheider das Kondensationswasser entfernt. Nach beendeter Veresterung wird das Butanol im Vakuum abgetrennt und der Rückstand im Vakuum über eine Vigreux-Kolonne destilliert. In 79 %-iger Ausbeute werden 392 g Ethyl-hydroxymethylphosphinsäure-n-butylester erhalten.

### Beispiel 11

Wie in Beispiel 1 wird im ersten Schritt Ethylphosphonigsäure hergestellt. Durch Zusatz von Butanol wird daraus analog zu in Beispiel 10 Ethylphosphonigsäure-n-Butylester hergestellt. In einem zweiten Schritt werden unter Rühren und Kühlen auf maximal 60 °C 37,5 g Ethylphosphonigsäure-n-Butylester und 10,8 g Vinylacetat vorgelegt und eine Lösung von 0,6 g Natriumbutoxid in 20 g Butanol zugegeben. Die Reaktionslösung wird im Vakuum (0,5 mmHg) destilliert und es werden 23 g Ethyl-(1-Hydroxyethylacetat)-phosphinsäure-n-butylester (C₂H₅-P(O)(O-n-C₄H₉)-CH(O-COCH₃)-CH₃) erhalten. Dieser wird mit 9,9 g konz. Schwefelsäure und 6,7 g demineralisiertes Wasser in 100 g Methanol umgesetzt und 17,2 g Ethyl-(1-Hydroxyethyl)phosphinsäure-n-butylester erhalten.

### Beispiel 12

1.000 g Dimethylterephtalat und 800 g Ethylenglycol werden in einem Autoklav zusammen mit 230 mg Mangan(II)acetattetrahydrat auf bis zu 220 °C erhitzt und das entstehende Methanol abdestilliert. Dann werden 72 g eines nach Beispiel 4 erhaltenen Glycolesters sowie 400 mg Antimontrioxid und 400 mg Phosphorsäure zugegeben und zunächst bei 1 Torr Druck auf 250 °C erhitzt, dann bei 0,2 Torr Druck auf 275 °C. Es wird eine flammgeschützte Polyesterformmasse mit ca 1% P-Gehalt erhalten, die eine V-0-Klassifikation aufweist.

### Beispiel 13

Der Ester aus Beispiel 10 wird in einem 1 I-Doppelmantel-Rührreaktor mit 3 g Dibutyl-zinnlaurat (Katalysator) versetzt und auf 180 °C erhitzt. Innerhalb von 14 h wird der Druck auf 1 mmHg abgesenkt. Das erhaltene Produkt (231 g) ist ein unter Butanolaustritt entstandenes internes Homooligomer der Ethylhydroxymethylphosphinsäure und besitzt einen P-Gehalt von 29,2 % (th 29,2 %). In einem 1 I-Autoklav werden 200 g des so erhaltenen Homooligomers mit 450 g PET-Chips (Polyclear 1101, Firma KoSa) bei 290 °C und 100 mmHg unter Rühren 0,5 h iang verschmolzen. Danach wird gekühlt. Das erhaltene flammgeschützte Polymer besitzt einen P-Gehalt von 9 %, wird zu UL-Prüfkörper verarbeitet und zeigt eine V-0-Klassifikation.

### Beispiel 14

In einem Doppelwellencompounder wurden 8.960 g eines nicht flammgeschützten PBT-Granulates mit 1.040 g eines Oligomers nach Beispiel 13 bei 275 °C zu flammgeschütztem PBT-Granulat compoundiert. Das Granulat hatte einen P-Gehalt von 3,0 % und zeigt eine V-0-Klassifikation.

| Bsp. | R-P(=O) (OX)-H | Lösemittel | | C=X-Verbindung | | Komponente 2 | | Produkt |
|---|---|---|---|---|---|---|---|---|
| | [g] | Typ | [g] | Typ | [g] | Typ | [g] | [g] |
| 1 | 147,2 | Wasser | 147,2 | Formaldehyd | 47,6 | - | - | 189,5 |
| 2 | 14,6 | Wasser/ Ethanol | 21,2/ 207,3 | Benzaldehyd | 35,0 | - | - | - |
| 3 | 48.8 | Wasser | 43,0 | Acetaldehyd | 26,4 | - | - | - |
| 4 | 100,1 | Wasser | 100,1 | Formaldehyd | 34,0 | Ethylenoxid | 88,7 | 229,5 |
| 5 | 100,1 | Wasser | 105,5 | Formaldehyd | 44,0 | Diethylamin | 233,4 | - |
| 7 | 48,8 | Wasser | 375,0 | Acetaldehyd | 22,0 | Diphenylmethylamin | 91,6 | 132,0 |
| 9 | 48,8 | Wasser | 375,0 | Acetaldehyd | 22,0 | Diphenylmethylamin | 91,6 | 125,0 |
| 11 | 37,5 | Butanol | 20,0 | Vinylacetat | 10,8 | - | - | 23,0 |

## Patentansprüche

1. Verfahren zur Herstellung von monofunktionaliserten Dialkylphosphinsäuren, -estern und -salzen, **dadurch gekennzeichnet, dass** man
a) eine Phosphinsäurequelle (I) 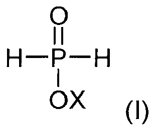 mit Olefinen (IV) 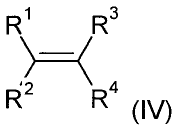 in Gegenwart eines Katalysators A zu einer Alkylphosphonigsäure, deren Salz oder Ester (II) 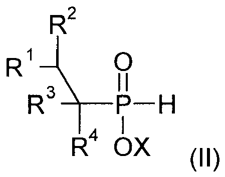 umsetzt,
b) die so entstandene Alkylphosphonigsäure, deren Salz oder Ester (II) mit Verbindungen, die C=C-, C=O- oder C=N-Doppelbindungen enthalten, zu Verbindungen (III) des Typs 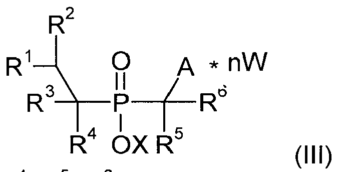 umsetzt, wobei R¹, R², R³, R⁴, R⁵, R⁶, gleich oder verschieden sind und unabhängig voneinander H, C₁-C₁₈-Alkyl, C₆-C₁₈-Aryl, C₆-C₁₈-Aralkyl, C₆-C₁₈-Alkyl-Aryl bedeuten und X H, Ca, Mg, Al, Zn, Ti, Fe, Ce, Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin bedeutet und wobei A OH, NH₂ oder O-CO-R⁸ bedeutet und R⁸ die gleiche Bedeutung wie R¹ bis R⁶ hat und W Salzsäure, Schwefelsäure, Salpetersäure, Phosphorsäure, Phosphonsäure, Phosphinsäure, Ameisensäure, Essigsäure, Propionsäure, Buttersäure, Milchsäure, Palmsäure, Stearinsäure, Malonsäure, Maleinsäure, Fumarsäure, Weinsäure, Zitronensäure, Ascorbinsäure, Trimethylboran, Triethylboran, Tributylboran oder Triphenylboran bedeutet, wobei n für eine ganze oder gebrochene Zahl von 0 bis 4 steht und es sich bei dem Katalysator A um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen und wobei das Verfahren im Schritt b) ohne Einsatz eines Katalysators abläuft oder dass man aus Verbindungen der Formel (III), wenn A O-CO-R⁸ bedeutet, in Gegenwart eines Katalysators B die Gruppierung R⁸CO₂Y abspaltet, wobei es sich bei dem Katalysator B ausschließlich um Lithium, Lithiumhydrid, Lithiumaluminium-hydrid, Methyllithium, Butyllithium, tert.-Butyllithium, Lithiumdiisopropylamid, Natrium, Natriumhydrid, Natriumborhydrid, Natriumhydroxid, Natriummethanolat oder Natriumbutylat, Kaliumhydroxid, Kaliummethanolat, Kaliumethanolat oder Kaliumbutylat handelt.

2. Verfahren nach Anspruch 1, **dadurch gekennzeichnet, dass** man die nach Schritt b) erhaltene mono-funktionalisierte Dialkylphosphinsäure, deren Salz oder Ester (III) anschließend in einem Schritt c) mit Metallverbindungen von Mg, Ca, Al, Sb, Sn, Ge, Ti, Fe, Zr, Zn, Ce, Bi, Sr, Mn, Li, Na, K und/oder einer protonierte Stickstoffbase zu den entsprechenden mono-funktionalisierten Dialkylphosphinsäuresalzen (III) dieser Metalle und/oder einer Stickstoffverbindung umgesetzt.

3. Verfahren nach Anspruch 1 oder 2, **dadurch gekennzeichnet, dass** man die nach Schritt a) erhaltene Alkylphosphonigsäure, deren Salz oder Ester (II) und/oder die nach Schritt b) erhaltene mono-funktionalisierte Dialkylphosphinsäure, deren Salz oder Ester (III) und/oder die jeweils resultierende Reaktionslösung davon mit einem Alkylenoxid oder einem Alkohol M-OH und/oder M'-OH verestert, und der jeweils entstandene Alkylphosphonigsäureester (II) und/oder mono-funktionalisierte Dialkylphosphinsäurester (III) den weiteren Reaktionsschritten b) oder c) unterwirft.

4. Verfahren nach einem oder mehreren der Ansprüche 1 bis 3, **dadurch gekennzeichnet, dass** R¹, R², R³, R⁴, R⁵, R⁶, R⁸ gleich oder verschieden sind und unabhängig voneinander H, Methyl, Ethyl, n-Propyl, Isopropyl, n-Butyl, Isobutyl, tert. Butyl und/oder Phenyl bedeuten.

5. Verfahren nach einem oder mehreren der Ansprüche 1 bis 4, **dadurch gekennzeichnet, dass** es sich bei den Übergangsmetallen und/oder Übergangsmetallverbindungen um Rhodium, Nickel, Palladium, Platin und/oder Ruthenium handelt.

6. Verfahren nach einem oder mehreren der Ansprüche 1 bis 5, **dadurch gekennzeichnet, dass** es bei dem Alkohol der allgemeinen Formel M-OH um lineare oder verzweigte, gesättigte und ungesättigte, einwertige organische Alkohole mit einer Kohlenstoffkettenlänge von C₁-C₁₈ und es bei dem Alkohol der allgemeinen Formel M'-OH um lineare oder verzweigte, gesättigte und ungesättigte, mehrwertige organische Alkohole mit einer Kohlenstoffkettenlänge von C₁-C₁₈ handelt.

7. Herstellung von von mono-funktionalisierten Dialkylphosphinsäuren, -estern und -salzen nach einem oder mehreren der Ansprüche 1 bis 6 und anschließende Verwendung dieser Produkte als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen, in Elektronikanwendungen, als Polymerizationskatalysator für Polyester, als copolykondensierbares Flammschutzmittel für Polyester- und Polyamidfasern, als Polyester Masterbatch, als Hitze-, Lichtstabilisator für Polymere zur Faservorbehandlung und Faseroberflächenmodifizierung.

8. Herstellung von mono-funktionalisierten Dialkylphosphinsäuren, -salzen und -estern nach einem oder mehreren der Ansprüche 1 bis 6 und anschließende Verwendung dieser Produkte als Flammschutzmittel, insbesondere Flammschutzmittel für Klarlacke und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung.

## Claims

1. A method for producing monofunctionalized dialkylphosphinic acids, esters and salts, which comprises
a) reacting a phosphinic acid source (I) 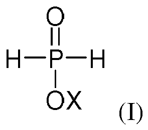 with olefins (IV) 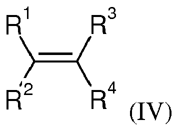 in the presence of a catalyst A to form an alkylphosphonous acid, salt or ester (II) 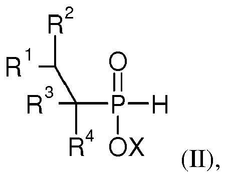
b) reacting the resulting alkylphosphonous acid, salt or ester (II) with compounds comprising C=C, C=O or C=N double bonds to form compounds (III) of the type 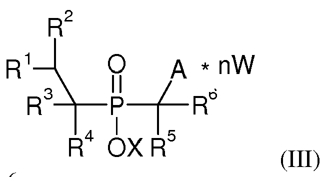 where R¹, R², R³, R⁴, R⁵, R⁶ are identical or different and are each independently H, C₁-C₁₈-alkyl, C₆-C₁₈-aryl, C₆-C₁₈-aralkyl, C₆-C₁₈-alkylaryl and X is H, Ca, Mg, Al, Zn, Ti, Fe, Ce, methyl, ethyl, n-propyl, isopropyl, n-butyl, isobutyl, tert-butyl, phenyl, ethylene glycol, propyl glycol, butyl glycol, pentyl glycol, hexyl glycol, allyl and/or glycerol and where A is OH, NH₂ or O-CO-R⁸ and R⁸ has the same meanings as R¹ to R⁶ and W is hydrochloric acid, sulfuric acid, nitric acid, phosphoric acid, phosphonic acid, phosphinic acid, formic acid, acetic acid, propionic acid, butyric acid, lactic acid, palmitic acid, stearic acid, malonic acid, maleic acid, fumaric acid, tartaric acid, citric acid, ascorbic acid, trimethylborane, triethylborane, tributylborane or triphenylborane, where n represents an integer or fraction ranging from 0 to 4 and the catalyst A comprises transition metals and/or transition metal compounds and/or catalyst systems composed of a transition metal and/or transition metal compound and at least one ligand and where the method in step b) is carried out without the addition of a catalyst, or wherein compounds of the formula (III) where A is O-CO-R⁸ have the R⁸CO₂Y moiety detached from them in the presence of a catalyst B, where the catalyst B exclusively comprises lithium, lithium hydride, lithium aluminohydride, methyllithium, butyllithium, tertbutyllithium, lithium diisopropylamide, sodium, sodium hydride, sodium borohydride, sodium hydroxide, sodium methoxide or sodium butoxide, potassium hydroxide, potassium methoxide, potassium ethoxide or potassium butoxide.

2. The method according to claim 1 wherein the monofunctionalized dialkylphosphinic acid, its salt or ester (III) obtained after step b) is subsequently reacted in a step c) with metal compounds of Mg, Ca, Al, Sb, Sn, Ge, Ti, Fe, Zr, Zn, Ce, Bi, Sr, Mn, Li, Na, K and/or a protonated nitrogen base to form the corresponding monofunctionalized dialkylphosphinic acid salts (III) of these metals and/or of a nitrogen compound.

3. The method according to claim 1 or 2 wherein the alkylphosphonous acid, salt or ester (II) obtained after step a) and/or the monofunctionalized dialkylphosphinic acid, salt or ester (III) obtained after step b) and/or the particular resulting reaction solution thereof are esterified with an alkylene oxide or an alcohol M-OH and/or M'-OH, and the respectively resulting alkylphosphonous ester (II) and/or monofunctionalized dialkylphosphinic ester (III) is subjected to the further reaction steps b) or c).

4. The method according to one or more of claims 1 to 3 wherein R¹, R², R³, R⁴, R⁵, R⁶, R⁸ are identical or different and are each independently H, methyl, ethyl, n-propyl, isopropyl, n-butyl, isobutyl, tert-butyl and/or phenyl.

5. The method according to one or more of claims 1 to 4 wherein the transition metals and/or transition metal compounds comprise rhodium, nickel, palladium, platinum and/or ruthenium.

6. The method according to one or more of claims 1 to 5 wherein the alcohol of the general formula M-OH comprises linear or branched, saturated and unsaturated, monohydric organic alcohols having a carbon chain length of C₁-C₁₈ and the alcohol of the general formula M'-OH comprises linear or branched, saturated and unsaturated polyhydric organic alcohols having a carbon chain length of C₁-C₁₈.

7. The production of monofunctionalized dialkylphosphinic acids, esters and salts according to one or more of claims 1 to 6 and subsequent use of these products as a binder, as a crosslinker or accelerant to cure epoxy resins, polyurethanes, unsaturated polyester resins, as polymer stabilizers, as crop protection agents, as a sequestrant, as a mineral oil additive, as a corrosion control agent, in washing and cleaning applications, in electronic applications as a polymerization catalyst for polyesters, as a copolycondensable flame retardant for polyester and polyamide fibers, as a polyester masterbatch, as a heat and light stabilizer for polymers, for fiber pretreatment and fiber surface modification.

8. The production of monofunctionalized dialkylphosphinic acids, salts and esters obtained according to one or more of claims 1 to 6 and subsequent use of these products as a flame retardant, more particularly as a flame retardant for clearcoats and intumescent coatings, as a flame retardant for wood and other cellulosic products, as a reactive and/or nonreactive flame retardant for polymers, in the manufacture of flame-retardant polymeric molding materials, in the manufacture of flame-retardant polymeric molded articles and/or for flame-retardant finishing of polyester and cellulose straight and blend fabrics by impregnation.

## Revendications

1. Procédé de fabrication d'acides, d'esters et de sels dialkylphosphiniques monofonctionnalisés, **caractérisé en ce que**
a) une source d'acide phosphinique (I) 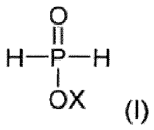 est mise en réaction avec des oléfines (IV) 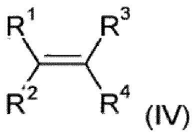 en présence d'un catalyseur A pour former un acide alkylphosphoneux, son sel ou ester (II) 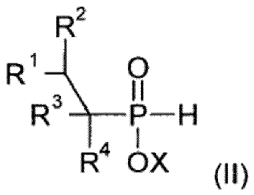
b) l'acide alkylphosphoneux ainsi formé, son sel ou ester (II) est mis en réaction avec des composés contenant des doubles liaisons C=C, C=O ou C=N, pour former des composés (III) de type 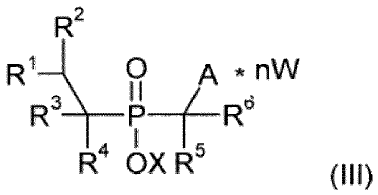 dans laquelle R¹, R², R³, R⁴, R⁵, R⁶ sont identiques ou différents et signifient indépendamment les uns des autres H, alkyle en C₁-C₁₈, aryle en C₆-C₁₈, aralkyle en C₆-C₁₈, alkylaryle en C₆-C₁₈, et X signifie H, Ca, Mg, Al, Zn, Ti, Fe, Ce, méthyle, éthyle, n-propyle, isopropyle, n-butyle, isobutyle, tert.-butyle, phényle, éthylène glycol, propylglycol, butylglycol, pentylglycol, hexylglycol, allyle et/ou glycérine, et A signifie OH, NH₂ ou O-CO-R⁸, et R⁸ a la même signification que R¹ à R⁶, et W signifie l'acide chlorhydrique, l'acide sulfurique, l'acide nitrique, l'acide phosphorique, l'acide phosphonique, l'acide phosphinique, l'acide formique, l'acide acétique, l'acide propionique, l'acide butyrique, l'acide lactique, l'acide palmitique, l'acide stéarique, l'acide malonique, l'acide maléique, l'acide fumarique, l'acide tartrique, l'acide citrique, l'acide ascorbique, le triméthylborane, le triéthylborane, le tributylborane ou le triphénylborane, n représentant un nombre entier ou fractionné de 0 à 4, et le catalyseur A consistant en des métaux de transition et/ou des composés de métaux de transition et/ou des systèmes catalytiques composés d'un métal de transition et/ou d'un composé de métal de transition et d'au moins un ligand, et le procédé à l'étape b) se déroulant sans utiliser de catalyseur, ou, à partir de composés de formule (III), lorsque A signifie O-CO-R⁸, le groupe R⁸CO₂Y étant clivé en présence d'un catalyseur B, le catalyseur B consistant exclusivement en du lithium, de l'hydrure de lithium, de l'hydrure de lithium-aluminium, du méthyl-lithium, du butyl-lithium, du tert.-butyl-lithium, du diisopropylamide de lithium, du sodium, de l'hydrure de sodium, du borohydrure de sodium, de l'hydroxyde de sodium, du méthanolate de sodium ou du butylate de sodium, de l'hydroxyde de potassium, du méthanolate de potassium, de l'éthanolate de potassium ou du butylate de potassium.

2. Procédé selon la revendication 1, **caractérisé en ce que** l'acide dialkylphosphinique monofonctionnalisé obtenu à l'étape b), son sel ou ester (III) est ensuite mis en réaction lors d'une étape c) avec des composés métalliques de Mg, Ca, Al, Sb, Sn, Ge, Ti, Fe, Zr, Zn, Ce, Bi, Sr, Mn, Li, Na, K et/ou une base azotée protonée pour former les sels d'acide dialkylphosphinique monofonctionnalisés correspondants (III) de ces métaux et/ou d'un composé azoté.

3. Procédé selon la revendication 1 ou 2, **caractérisé en ce que** l'acide alkylphosphoneux obtenu à l'étape a), son sel ou ester (II) et/ou l'acide dialkylphosphinique monofonctionnalisé obtenu à l'étape b), son sel ou ester (III) et/ou leur solution réactionnelle résultante à chaque fois est estérifié avec un oxyde d'alkylène ou un alcool M-OH et/ou M'-OH, et l'ester d'acide alkylphosphoneux (II) et/ou l'ester d'acide dialkylphosphinique monofonctionnalisé (III) formé à chaque fois est soumis aux étapes de réaction b) ou c) ultérieures.

4. Procédé selon une ou plusieurs des revendications 1 à 3, **caractérisé en ce que** R¹, R², R³, R⁴, R⁵, R⁶, R⁸ sont identiques ou différents et signifient indépendamment les uns des autres H, méthyle, éthyle, n-propyle, isopropyle, n-butyle, isobutyle, tert.-butyle et/ou phényle.

5. Procédé selon une ou plusieurs des revendications 1 à 4, **caractérisé en ce que** les métaux de transition et/ou les composés de métaux de transition consistent en du rhodium, du nickel, du palladium, du platine et/ou du ruthénium.

6. Procédé selon une ou plusieurs des revendications 1 à 5, **caractérisé en ce que** l'alcool de formule générale M-OH consiste en des alcools organiques monovalents linéaires ou ramifiés, saturés et insaturés, ayant une longueur de chaîne carbonée de C₁-C₁₈, et l'alcool de formule générale M'-OH consiste en des alcools organiques polyvalents linéaires ou ramifiés, saturés et insaturés, ayant une longueur de chaîne carbonée de C₁-C₁₈.

7. Fabrication d'acides, d'esters et de sels dialkylphosphiniques monofonctionnalisés selon une ou plusieurs des revendications 1 à 6, puis utilisation de ces produits en tant que liants, en tant qu'agents de réticulation ou en tant qu'accélérateurs lors du durcissement de résines époxy, de polyuréthanes, de résines de polyester insaturées, en tant que stabilisateurs polymères, en tant qu'agents phytosanitaires, en tant que séquestrants, en tant qu'additif pour huile minérale, en tant qu'agents anticorrosion, dans des applications de détergents, dans des applications électroniques, en tant que catalyseurs de polymérisation pour polyesters, en tant qu'agents ignifuges copolycondensables pour fibres de polyester et de polyamide, en tant que mélanges maîtres de polyester, en tant que thermo-, photostabilisateurs pour polymères pour le prétraitement de fibres et la modification de surface de fibres.

8. Fabrication d'acides, de sels et d'esters dialkylphosphiniques monofonctionnalisés selon une ou plusieurs des revendications 1 à 6, puis utilisation de ces produits en tant qu'agents ignifuges, notamment agents ignifuges pour vernis transparents et revêtements intumescents, agents ignifuges pour le bois et les autres produits cellulosiques, en tant qu'agents ignifuges réactifs et/ou non réactifs pour polymères, pour la fabrication de matières à mouler polymères ignifugées, pour la fabrication de corps moulés polymères ignifugés et/ou pour l'ignifugation de polyesters et de tissus cellulosiques purs et mixtes par imprégnation.
